(19) Europäisches Patentamt

European Patent Office

Office européen des brevets

(11) **EP 2 663 845 B1**

(12) # EUROPEAN PATENT SPECIFICATION

(45) Date of publication and mention
of the grant of the patent:
**05.12.2018 Bulletin 2018/49**

(21) Application number: **11855610.9**

(22) Date of filing: **02.05.2011**

(51) Int Cl.:
***G01K 3/06*** (2006.01)

(86) International application number:
**PCT/FI2011/050398**

(87) International publication number:
**WO 2012/095550 (19.07.2012 Gazette 2012/29)**

(54) **A METHOD AND AN APPARATUS FOR MONITORING CONDITION OF A BUILDING STRUCTURE**

VERFAHREN UND VORRICHTUNG ZUR ÜBERWACHUNG DES ZUSTANDS EINER GEBÄUDESTRUKTUR

PROCÉDÉ ET APPAREIL POUR CONTRÔLER L'ÉTAT D'UNE STRUCTURE DE BÂTIMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2011 PCT/FI2011/050020**

(43) Date of publication of application:
**20.11.2013 Bulletin 2013/47**

(73) Proprietor: **Smartrac Investment B.V.
1077 XX Amsterdam (NL)**

(72) Inventors:
- **VIRTANEN, Juhani**
  **FI-33100 Tampere (FI)**
- **MANNINEN, Antti**
  **FI-33100 Tampere (FI)**
- **KOSKELAINEN, Tuomas**
  **FI-33960 Pirkkala (FI)**
- **NIKKANEN, Mikko**
  **FI-33710 Tampere (FI)**
- **AALTO, Harri**
  **FI-33960 Pirkkala (FI)**
- **VATTULAINEN, Juha**
  **FI-36200 Kangasala (FI)**

(74) Representative: **Berggren Oy, Tampere
Visiokatu 1
33720 Tampere (FI)**

(56) References cited:
**EP-A1- 1 909 218        US-A1- 2007 222 590
US-A1- 2009 289 768    US-A1- 2010 090 802
US-B1- 7 551 058**

- **O'CONNOR M.C.: 'RFID Cures Concrete' A
REPRINT FROM THE OCTOBER 2006 ISSUE OF
RFID JOURNAL, [Online] 30 October 2006,
XP003032762 Retrieved from the Internet:
<URL:http://www.wakeinc.com/PDF/rfidcures.p
df> [retrieved on 2011-10-20]**
- **OPPERMAN C.A. ET AL.: 'A Generic NFC-enabled
Measurement System for Remote Monitoring and
Control of Client-side Equipment' THIRD
INTERNATIONAL WORKSHOP ON NEAR FIELD
COMMUNICATION 22 February 2011,
XP031937005**
- **KUO C.-W. ET AL.: 'A ubiquitous infrastructure
applications to support museum's service' IEEE
INTERNATIONAL CONFERENCE ON
INDUSTRIAL ENGINEERING AND ENGINEERING
MANAGEMENT 08 December 2009, XP031595429**

**Description**

FIELD OF THE INVENTION

The present invention relates to monitoring condition of building structures, such as a wall, floor or ceiling structures. In particular, the present invention relates to detecting moisture in building structures.

BACKGROUND

Buildings contain materials which may be damaged due to moisture. Moisture may cause e.g. rotting of wood in structural elements of a building. The presence of moisture may cause growth of mold fungus, which is harmful to the health of humans and animals.
Typically, an unpleasant smell originating from a structure of a building, a change in the visual appearance, and/or deformation (swelling or collapsing) of a structure may be an indication that moisture has already damaged the building. However, at this late stage, it may be very expensive to repair the building.
Sometimes the damages may be limited or avoided if the moisture can be detected at an early stage.
US 2010/0090802 discloses a moisture sensing label, which incorporates two RFID tags. One of the tags is covered e.g. with a moisture absorbing material. In a humid environment the antenna of the covered tag gets less efficient and needs a stronger RF signal to operate. The difference in required power to operate is proportional to the humidity level.
US 2007/222590 A1 discloses sensing temperature by using an RFID tag, which comprises an oscillator circuit. The oscillator circuit has a component sensitive to an environmental factor, wherein a frequency of a signal output by the oscillator circuit is indicative of a value of the environmental factor.
The sensitive component may be e.g. a thermistor or a capacitive hygrometer.

SUMMARY

An object of the present invention is to provide a method for monitoring condition of building structures. An object of the present invention is to provide an apparatus for monitoring condition of building structures.
According to a first aspect of the invention, there is provided a method according to claim 1.
According to a second aspect of the invention, there is provided an apparatus according to claim 14.
Further aspects of the invention are defined in the other claims.
A method for monitoring condition of a building structure may comprise:

- determining first temperature information ($T_1$,TINF1) from first temperature data (TDATA1) obtained from a first temperature sensor (100a),
- determining reference temperature information ($T_{1,REF}$,TREF1) by using second temperature data (TDATA2) obtained from a second temperature sensor (100b), and
- comparing the first temperature information ($T_1$,TINF1) with the reference temperature information ($T_{1,REF}$,TREF1) in order to detect an abnormal condition of the structure (350, 380, 390),

wherein the first sensor (100a, 100b) is positioned within the structure (350, 380, 390) such that a first distance (zi) between the first temperature sensor (100a) and an inner surface (INSRF) of the structure (350, 380, 390) is different from a second distance ($z_2$) between the second temperature sensor (100b) and the inner surface (INSRF), wherein the first temperature sensor (100a) is an RFID transponder arranged to transmit the first temperature data (TDATA1), and wherein the first temperature sensor (100a) is arranged to extract operating energy from a radio frequency field (ROG).
RFID means Radio Frequency Identification.
An RFID reader may be arranged to obtain temperature data from a first temperature sensor. The first temperature sensor may be an RFID transponder, which is permanently embedded within the building structure.
Several temperature sensors may be arranged to provide a temperature profile across a building structure. The measured temperature profile may be compared with reference information in order to detect an abnormal condition of the building structure.
In an embodiment, the measured temperature profile may be compared with a reference temperature profile in order to detect an abnormal condition.
Advantageously, a temperature profile may be measured by obtaining temperature data from three or more RFID transponders positioned at different depths within the structure.
In an embodiment, the slope of a first portion of the measured temperature profile may be compared with the slope of a second portion of the measured temperature profile in order to detect an abnormal condition. The slope of the first portion and the slope of the second portion may be determined when three or more temperature values are

EP 2 663 845 B1

measured at different positions.

In an embodiment, the slope of a first portion of the measured temperature profile may be compared with the slope of a reference profile in order to detect an abnormal condition. The slope of the first portion may be determined when two or more temperature values are measured at different positions.

The presence of moisture in the building structure may be detected by comparing measured temperature information with reference temperature information. The presence of moisture may change thermal conductivity and/or heat capacity of a building element. The presence of moisture may cause a deviation in the spatial temperature profile, when compared with a reference profile.

At least the first temperature sensor may be an RFID transponder.

An RFID transponder may comprise e.g. a temperature-dependent local oscillator. In this case, a reader may be arranged to obtain temperature data from the RFID transponder e.g. by monitoring variations in the modulation frequency of a response sent by the transponder.

An RFID transponder may also be arranged to a response, which contains measured temperature data e.g. in a pulse code modulated (PCM) format. An RFID transponder may comprise a temperature sensor unit, e.g. a temperature-dependent resistor for monitoring temperature.

By using an RFID transponder, temperatures may be monitored through a barrier without using galvanic feedthroughs. There is no need to have a line-of-sight between a reader and the temperature measurement point.

An RFID transponder may be arranged to extract operating energy from a radio frequency field. In particular, an RFID reader may be arranged to energize the transponder by providing a radio frequency field. Thus, the life of a battery does not limit the lifetime of the transponder. In particular, there is no need to replace the battery of the transponder during the lifetime of the transponder. The operating lifetime may be very long, e.g. 10 - 50 years. In an embodiment, the use of a battery in the transponder may be completely avoided.

Because there is no need to change batteries, the transponder may be hermetically encapsulated to withstand corrosive environmental conditions. In an embodiment, all electrically conductive parts of the transponder may be substantially permanently covered with an insulating layer. In an embodyment, a transponder may be permanently embedded in a building structure. A transponder may be permanently embedded e.g. in a concrete element. A transponder may be permanently embedded inside a wall, ceiling or floor of a building, and the transponder may used for monitoring temperatures throughout the lifetime of the building.

Thanks to the invention, the battery may be omitted. Thus, the use of toxic chemicals may be reduced or avoided.

The manufacturing costs for RFID transponders may be low. Thanks to the potentially low price, it may be economically feasible to use the transponders for monitoring temperature profiles in a high number of different locations in a building. In an embodiment, temperature data may be obtained from the transponders by using a single portable RFID reader, which can be used for monitoring condition of several different buildings. Thus, the investment costs regarding a single building may be very low.

When the measured temperature profile deviates from a reference temperature profile, this may be an indication that moisture is present in a building structure. However, in certain cases a deviation may also be an indication of e.g. missing thermal insulation or decomposed thermal insulation. In certain cases a deviation may indicate settling of thermal insulation (i.e. vertical displacement caused by the gravity). In certain cases a deviation may also be an indication of an undesired air flow (draft/draught) through a gap of the building structure.

The present invention allows monitoring of condition of building structures e.g. walls, floors and roofs/ceilings. The conditions of the structures have an effect on the heating and/or cooling costs. Thanks to the invention, energy and/or maintenance costs may be substantially reduced.

In an embodiment, identification data provided by a transponder may also be utilized even after the building has been demolished, e.g. in order to identify the type of materials used in the building.

In addition to buildings, an array of RFID temperature sensors may be used for monitoring condition of other, typically thermally insulated structures where the temperatures within the structure may depend on location.

The embodiments of the invention and their benefits will become more apparent to a person skilled in the art through the description and examples given herein below, and also through the appended claims.

BRIEF DESCRIPTION OF THE DRAWINGS

Fig. 1        shows, in a cross-sectional view, a building comprising temperature sensors arranged to measure a temperature profile,

Fig. 2a       shows, in a three dimensional view, a temperature-measuring RFID transponder comprising a dipole antenna,

Fig. 2b    shows, in a three dimensional view, a temperature-measuring RFID transponder comprising an inductive antenna,

Fig. 3a    shows, in a three dimensional view, obtaining temperature data from temperature sensors,

Fig. 3b    show, in a three dimensional view, positioning of transponders arranged to measure a temperature profile across a building structure,

Fig. 4a    shows a reference temperature profile for a building structure in case of a warmed interior,

Fig. 4b    shows transformation of a reference temperature profile in a vertical direction (i.e. in the direction of the temperature axis) according to a changed external temperature,

Fig. 4c    shows an abnormal temperature profile for the structure of Fig. 4a,

Fig. 5a    shows displaying temperature information,

Fig. 5b    shows displaying temperature information,

Fig. 5c    shows displaying temperature information,

Fig. 6    shows a temperature profile of a building structure in case of cooled interior,

Fig. 7a    shows an RFID reader and an RFID transponder comprising a local oscillator,

Fig. 7b    shows an RFID reader and an RFID transponder comprising a temperature sensor element,

Fig. 8    shows a portion of an interrogation signal sent from an RFID reader,

Fig. 9    shows modulation frequency as a function of the frequency-setting parameter of the interrogation signal,

Fig. 10a    shows an apparatus for monitoring temperatures,

Fig. 10b    shows an apparatus for monitoring temperatures, wherein the apparatus comprises and an auxiliary unit.

DETAILED DESCRIPTION

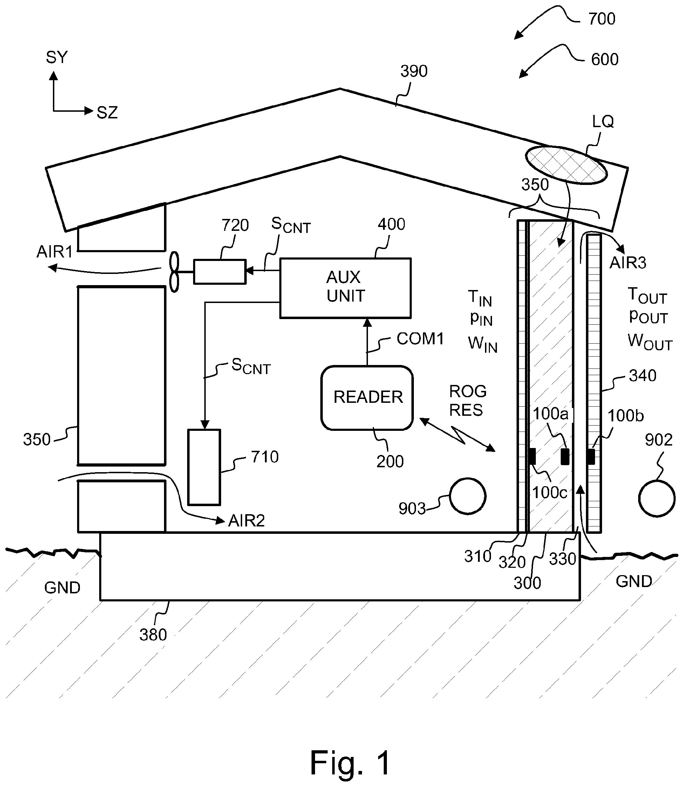

Referring to Fig. 1, a building 600 may comprise e.g. one or more walls 350, a floor 380, and a roof (or ceiling) 390. A wall 350 of the building 600 may comprise e.g. an inner liner 310, a moisture barrier 320, thermal insulation 300, and an outer liner 340. Two or more temperature sensors 100a, 100b, 100c may be arranged to monitor temperature profile of a building structure. The building structure may be e.g. a wall 350, of a floor 380 or of a roof 390. A temperature profile may also be called as a spatial temperature distribution.

The building structures are typically optimized for certain environmental conditions. The building structure shown in Fig. 1 is typical in colder climatic areas where the average temperature of outdoor air is low, and the buildings are optimized for internal heating. In hotter climatic areas, the buildings may be optimized for internal cooling (air conditioning). Depending on whether the building structure is optimized for colder regions or hotter regions, the structural elements may be arranged differently as the temperature gradient over the structure during the main part of the year may be different or even inverted due to the need for heating or cooling the building.

Temperature data obtained from the sensors 100a, 100b, 100c may be used for monitoring condition of a building structure.

Temperature data obtained from the sensors 100a, 100b, 100c may be used for controlling heating, cooling and/or ventilation of the building 600.

Temperature data obtained from the sensors 100a, 100b, 100c may be used for estimating need for maintenance of a building structure.

For example, moisture LQ (i.e. water) may penetrate into the structure 350 e.g. due to a leaking roof 390. The wet thermal insulation may lead to a temperature profile, which deviates from a normal reference temperature profile. The abnormal condition of the structure may be detected by comparing the measured temperature information with reference temperature information.

Temperature data may be obtained from the sensors 100a, 100b, 100c wirelessly by e.g. using an RFID reader 200.

The monitoring or controlling system 700 may comprise two or more temperature sensors 100a, 100b, 100c.

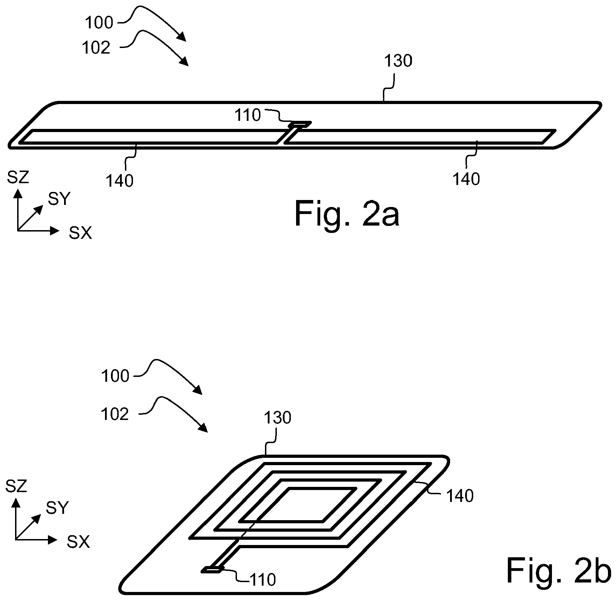

At least one of the sensors is an RFID transponder 100 (Figs 2, 3, 7a, 7b) positioned within the structure 350, 380, 390 so that it can be permanently embedded within the building structure without a need to install measurement cables.

Advantageously, the sensors 100a, 100b, and 100c may be RFID transponders. The sensors 100a, 100b and 100c may be attached to the structure 350, 380, 390 at different depths.

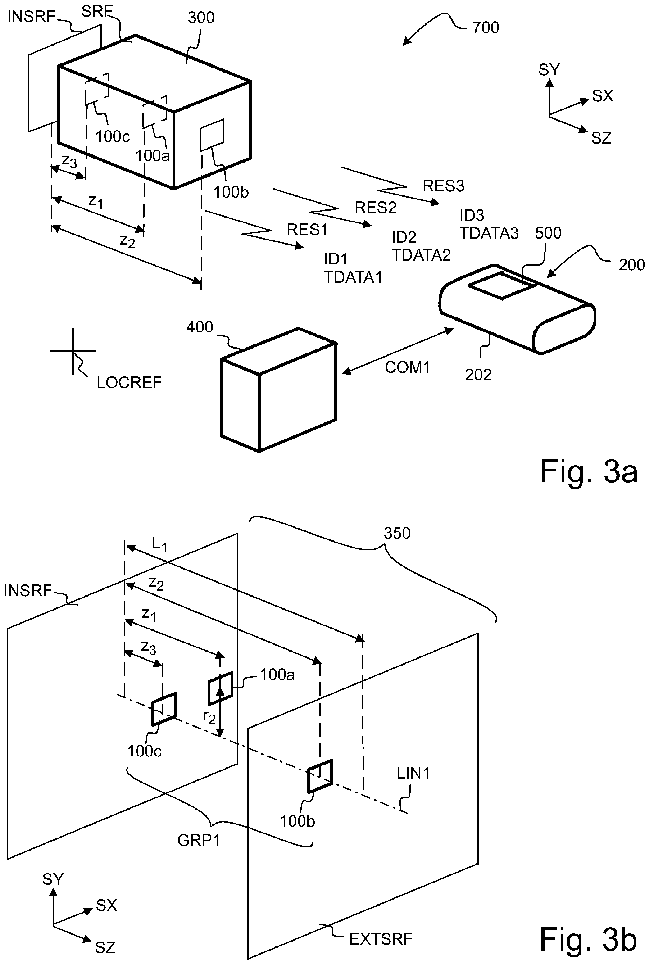

The monitoring or controlling system 700 may comprise a temperature sensor 902, which is arranged to monitor an external temperature $T_{OUT}$. The monitoring or controlling system 700 may comprise a temperature sensor 903, which is arranged to monitor an internal temperature $T_{IN}$. The external temperature $T_{OUT}$ denotes the temperature of the outer (exposed) surface EXTSRF of the building structure, and the internal $T_{IN}$ denotes the temperature of the inner (exposed) surface INSRF of the building structure. (See the discussion related to Fig. 3b for the definition of the surfaces INSRF, EXTSRF).

The sensors 902, 903 may be RFID transponders. Thus, there is no need to install signal cables for obtaining temperature data from the sensors 902, 903.

However, as it is not necessary to embed the sensor 902, 903 within the structure 350, 380, 390, the sensor 902 and/or 903 may also be a conventional thermometer, instead of being a passive RFID device. A conventional thermometer may comprise e.g. a temperature-dependent resistor or a thermocouple, which is connected to a reader by a (long) electrical cable. The sensor 902 or 903 may also be e.g. an infrared thermometer which is arranged to monitor temperature of a surface based on thermal (infrared) radiation emitted from the surface.

In an embodiment, RFID temperature sensors 100b, 100c may be replaced with conventional temperature sensors 902, 903. Temperature data obtained from the sensor 100b may be replaced with temperature data obtained from the sensor 902. Temperature data obtained from the sensor 100c may be replaced with temperature data obtained from the sensor 903.

In certain weather conditions, the temperature of the external surface of the building structure may be estimated based on the measured air temperature outside the building 600, which a reasonable accuracy. In that case, the sensor 902, 903 may also be arranged to measure the temperature of air inside and/or outside the building 600. However, in certain other weather conditions, e.g. in direct sunshine, the surface temperature of the building structure cannot be reliably estimated from the air temperature. Advantageously, the sensor 902 may be arranged to monitor the temperature of the outer surface of the building element.

The building 600 and/or the system 700 may optionally comprise an auxiliary unit 400, a ventilation fan 720 and/or a heater/cooler 710.

A ventilation unit 720, an air humidifier, a cooling unit 710 and/or a heating unit 710 may be controlled manually, based on a comparison between measured temperature information and reference temperature information.

An auxiliary unit 400 may be optionally arranged to control the ventilation unit 720, cooling unit 710 and/or a heating unit 710 based on a comparison between measured temperature information and reference temperature information. The auxiliary unit 400 may be arranged to provide one or more control signals $S_{CNT}$ based on temperature data obtained from the sensors 100a, 100b, 100c. A control signal $S_{CNT}$ may be used e.g. for controlling a ventilation unit 720. A control signal $S_{CNT}$ may be used e.g. for controlling a heating unit 710. A control signal $S_{CNT}$ may be used e.g. for controlling a cooling unit 710. A control signal $S_{CNT}$ may be used e.g. for controlling an air humidifier. COM1 refers to communication between a reader 200 and the auxiliary unit 400.

The ventilation unit 720 may be arranged to provide air flows AIR1, AIR2. The air flow AIR1 may transfer air from the interior of the building 600 to the exterior of the building. The air flow AIR2 may transfer air from the exterior to the interior of the building.

$p_{IN}$ denotes pressure inside the building, and $W_{IN}$ denotes moisture concentration inside the building. $p_{OUT}$ denotes pressure inside the building, and $W_{OUT}$ denotes moisture concentration inside the building.

The moisture concentration may be expressed e.g. in grams per cubic meter ($g/m_3$). For example, the moisture concentration $W_{IN}$ inside the building may be e.g. 13 $g/m^3$, which corresponds to a relative humidity of 75% at a temperature $T_{IN}$ = 20 °C. For example, the moisture concentration $W_{OUT}$ outside the building may be e.g. 7 $g/m^3$, which corresponds to a relative humidity of 100% at a temperature $T_{IN}$ = 5 °C.

The pressure $p_{IN}$ may be controlled by e.g. adjusting operation of the ventilation unit 720. The temperature $T_{IN}$ may be controlled e.g. by adjusting operation of the ventilation unit 720 and/or by adjusting operation of the heater/cooler 710. The moisture concentration $W_{IN}$ may be controlled e.g. by adjusting operation an air humidifier. To a certain extent, the moisture concentration $W_{IN}$ may also be controlled by adjusting operation of the ventilation unit 720 and/or by adjusting operation of the heater/cooler 710.

A floor 380 or a roof 390 may also comprise building elements 300, 310, 320, 340. Although the thermal insulation 300 is used as a specific example of a "building element", the term "building element" may also refer e.g. to the liner 310, 340 or to the barrier 310.

Moisture LQ may penetrate into a building structure 350, 380, 390 e.g. due to a leak in the roof 390.

Moisture LQ may penetrate into a building structure 350, 380, 390 also e.g.

- due to rain,
- due to incorrect ventilation,
- due to insufficient heating,
- due to excessive cooling,
- due to excessive humidification of air,
- due to a leaking or missing moisture barrier 320,
- due to a moisture barrier, which is in a wrong position,
- due to a leak in a water pipeline, and/or
- due to water originating from the ground GND (e.g. due to capillary action).

The presence of water in a building structure may e.g.

- cause growth of mold fungus,
- promote life of harmful insects and bacteria (e.g. ants, worms, termites),
- cause unpleasant smell,
- degrade visual appearance,
- degrade mechanical strength,
- increase thermal conductivity (i.e. may degrade thermal insulation properties),
- increase weight of the building element, which in turn may cause overstress or deformation of supporting structures.

If moisture is detected at an early stage, corrective actions may be taken, and moisture-induced damage may be limited or avoided.

For example, heating power and/or ventilation may be temporarily increased in order to limit moisture-induced damages and/or in order to evaporate moisture away from the building structure.

The building structure may be repaired or replaced in order to limit moisture-induced damages.

The heating power and/or ventilation air flow rate may be adjusted to a level, which is slightly above a limit where harmful condensation occurs. Thus, the heating power and/or ventilation may be adjusted in an economical way. Thanks to the invention, the average power consumption may be minimized.

The heating power and/or ventilation air flow rate may be adjusted in an optimum way according to the external temperature $T_{OUT}$. In particular, the heating power and ventilation flow rate used in the winter may be different from heating power and ventilation flow rate used in the summer.

In certain buildings, a relatively high level of humidity may be required. For example, in a museum, the humidity may be kept above a predetermined limit (within a predetermined humidity range) in order to conserve valuable museum pieces. If a room is used for growing certain types of plants (e.g. flowers), the humidity may be kept above a predetermined limit. On the other hand, a high level of humidity may increase the risk of moisture-induced damages. Thanks to the invention, higher average levels of humidity may be allowed, as harmful condensation of moisture to the structures may be detected and/or prevented.

A wall 350, a floor 380 or a roof 390 may comprise a ventilation layer (space) 340 for removing moisture from the building element(s). An air flow AIR3 guided through the ventilation layer 340 may carry water vapor away from the building element(s).

Fig. 2a shows a temperature-measuring RFID transponder 100 comprising a dipole antenna 140 attached to an RFID semiconductor chip 110.

Fig. 2b shows a temperature-measuring RFID transponder 100 comprising an inductive antenna 140 attached to an RFID semiconductor chip 110.

Referring to Figs. 2a and 2b, the temperature-measuring RFID transponder 100 may be optionally attached to a substrate 130 in order to form an RFID tag 102. The transponder 100 or the tag 102 may be attached to a building element e.g. by an adhesive. The transponder 100 or the tag may also be embedded in a building element or between building elements without using an adhesive. The transponder 100 may be directly attached to the element 300 or encapsulated inside the element 300 without using an additional substrate 130 (i.e. the material of the item 300a may be used as the substrate). The total thickness of a tag 102 or a transponder 100 (in the direction SZ) may be smaller than or equal to 1 mm. The tag 102 or a transponder 100 may be flexible.

Referring to Fig. 3a, an apparatus 700 for providing a temperature profile of a building may comprise a (RFID) reader 200 arranged to obtain temperature data from the sensors 100a, 100b, 100c. The sensors 100a, 100b, 100c may be attached to a building element 300 at different depths. The building element 300 may be e.g. a thermal insulation element, a wooden beam or a concrete element.

The apparatus 700 may optionally comprise an auxiliary unit 400 e.g. for providing a control signal $S_{CNT}$.

The sensors 100a, 100b, 100c may send signals RES, which allow monitoring of temperatures at different positions within a building structure.

Sensors 100a, 100b, 100c may be positioned at different distances $z_1$, $z_2$, $z_3$ from an inner surface INSRF of a building structure. A building element 300 may comprise e.g. one, two, three or more transponders 100a, 100b, 100c positioned at different distances from a surface SRF of the element.

The distances between the sensors 100a, 100b, 100c and the surface INSRF may be determined e.g. in the direction SZ. The surface SRF of the element 300 may be substantially parallel to the inner surface INSRF of a building structure. The inner surface INSRF may be substantially parallel to a plane defined by the directions SX and SY. SX, SY and SX denote orthogonal directions.

The sensors 100a, 100b, 100c may be positioned such that a spatial temperature profile may be determined in the direction SZ, which is substantially perpendicular to the building structure 350, 380, 390. In other words, the sensors 100a, 100b, 100c may be positioned such that a spatial temperature profile may be determined across the building structure.

A reader 200 may be arranged to send an interrogation signal ROG to temperature sensors 100a, 100b, 100c.

Each sensor 100a, 100b, 100c, may be arranged to transmit a response RES to an interrogation signal ROG.

The first sensor 100a may respond to an interrogation signal ROG by sending a response RES1. The second sensor 100b may respond to an interrogation signal ROG by sending a response RES2. The third sensor 100c may respond to an interrogation signal ROG by sending a response RES3.

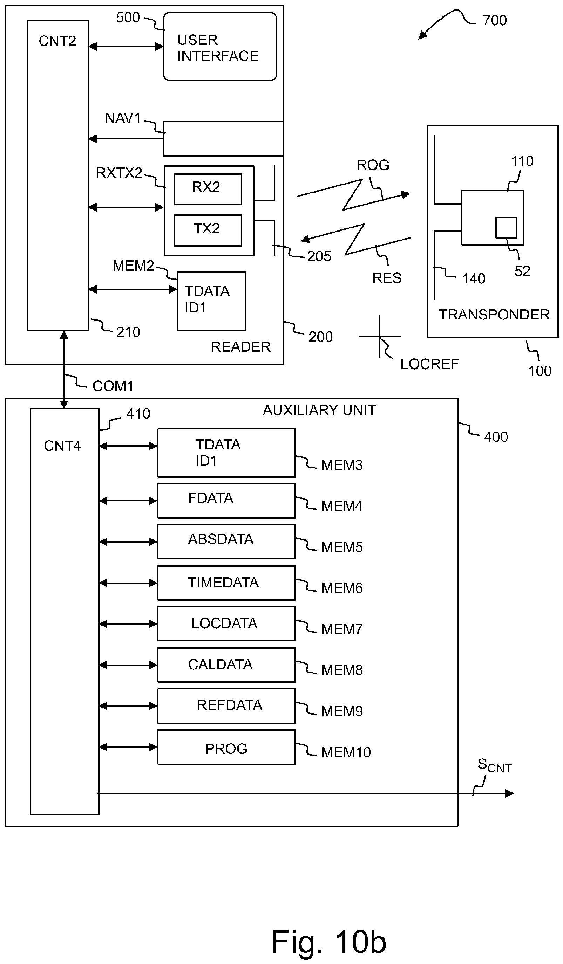

A response RES1 transmitted by the first sensor 100a may comprise temperature data TDATA1 and/or identification data ID1 associated with the first sensor 100a. The temperature data TDATA1 may be used for monitoring temperature of a first portion of a building structure. The identification data ID1 may be used for identifying the first sensor 100a. The location of the first sensor 100a may be retrieved from a memory MEM9 (Fig. 10b) based on the identification data ID1.

A response RES2 transmitted by the second sensor 100b may comprise temperature data TDATA2 and/or identification data ID2 associated with the second sensor 100b. The temperature data TDATA2 may be used for monitoring temperature of a second portion of the building structure. The identification data ID2 may be used for identifying the second sensor 100b. The location of the second sensor 100b may be retrieved from a memory MEM9 (Fig. 10b) based on the identification data ID2.

A response RES3 transmitted by the third sensor 100c may comprise temperature data TDATA3 and/or identification data ID3 associated with the third sensor 100c. The temperature data TDATA3 may be used for monitoring temperature of a third portion of the building structure. The identification data ID3 may be used for identifying the third sensor 100c. The location of the third sensor 100c may be retrieved from a memory MEM9 (Fig. 10b) based on the identification data ID3.

Temperature data TDATA1, TDATA2, TDATA3 obtained from the sensors 100a, 100b, 100c may be presented or stored such that the temperature data is associated with the identity of the sensors 100a, 100b, 100c. The identity may be determined based on the identification data ID1, ID2, ID3.

Temperature data TDATA1, TDATA2, TDATA3 obtained from the sensors 100a, 100b, 100c may be presented or stored such that the temperature data is associated with the location of the sensors 100a, 100b, 100c. The location of a sensor 100a, 100b, 100c may be determined with respect to a location reference LOCREF. For example, a corner of a building 600 may be used as a location reference LOCREF.

The location of a sensor 100a may be determined e.g.:

- by measuring the location of the sensor 100a with respect to the reader 200,
- by measuring the location of the sensor 100a with respect to a location reference LOCREF, or
- by retrieving a location of the sensor 100a from a memory based on identification data ID1 obtained from the sensor 100a.

The measurement of the location with respect to the location reference LOCREF may comprise:

- measuring the location of a reader 200 with respect to the location reference LOCREF, and
- measuring the location of the sensor 100a with respect to the reader 200.

The location of the sensor 100a may be measured e.g. by triangulation. The location of the sensor 100a may be measured e.g. by measuring one or more time delays between sending an interrogation signal ROG and receiving a response RES1.Measuring the location of the sensor 100a with respect to the reader 200 may comprise e.g. spatially varying the amplitude of interrogation signals sent by the reader 200.

The reader 200 may be movable or moved with respect to a location reference LOCREF.

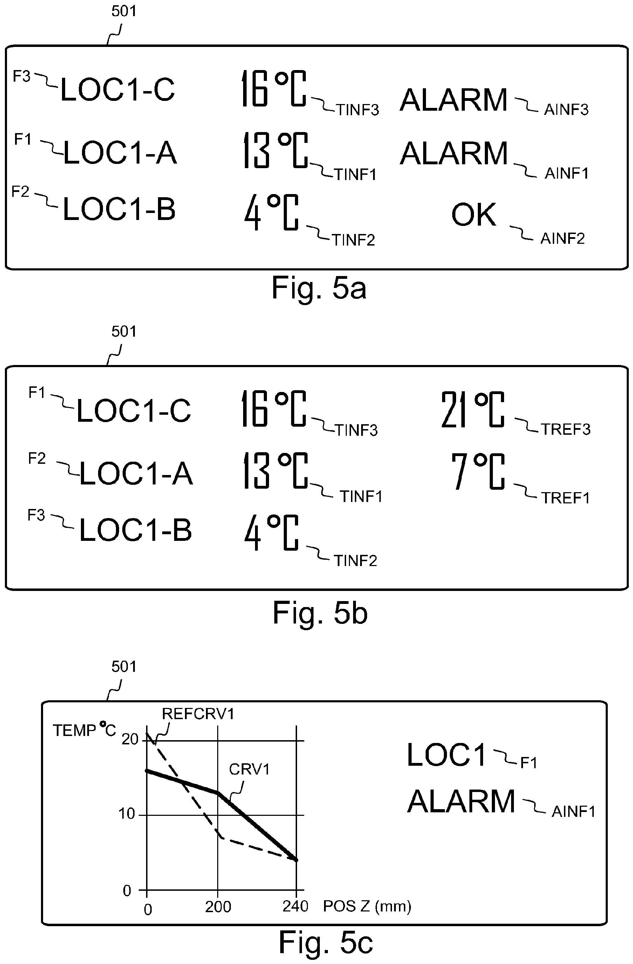

The reader 200 may comprise a body 202 and a user interface 500. The user interface 500 may comprise e.g. a display 501 (See Figs. 5a-5c) for visually displaying temperature information determined from signals sent from the sensors 100a, 100b, 100c. The user interface 500 may comprise e.g. a keypad or a touch-sensitive screen for receiving data and/or commands.

The reader 200 may communicate with the auxiliary unit 400.

Temperature data obtained from the sensors 100a, 100b,100c may be stored in the auxiliary unit 400, which may be separate from the reader 200. The auxiliary unit 400 may comprise e.g. a memory for storing temperature data TDATA, reference data REFDATA and/or calibration data CALDATA. The auxiliary unit 400 may also be called a data storage unit and/or a data processing unit.

Fig. 3b, shows positions of sensors 100a, 100b 100c with respect to surfaces INSRF, EXTSRF of a building structure. In case of a wall 350, INSRF refers to an inner exposed surface of the wall 350, and EXTSRF refers to an outer exposed surface of the wall. The term "exposed" means herein that the inner exposed surface INSRF and the outer exposed surface are visible without dismantling any parts of the building.

In case of a floor 380, INSRF refers to an inner exposed surface of the floor 380, and EXTSRF refers to an outer exposed surface of the floor 380.

However, a floor 380 may also be constructed against the ground such that the floor does not have an outer surface, which would be visible without dismantling any parts of the building.

In case of a roof 390, INSRF refers to an inner exposed surface of the roof 390, and EXTSRF refers to an outer exposed surface of the roof 390.

A temperature profile may be determined from temperature data obtained from two or more sensors 100a, 100b, 100c belonging to a group GRP1. The sensors belonging to the group GRP1 may be positioned at different distances $z_1$, $z_2$, $z_3$ from the inner surface INSRF.

The sensors belonging to the group GRP1 may be positioned substantially on a line LIN1, which is substantially perpendicular to the inner surface INSRF. Most reliable temperature information may be provided when the sensors belonging to the group GRP1 are disposed on the line LIN1. In the central areas of a wall, floor, or roof, it may be assumed that the temperature gradient of the wall, floor or roof is substantially parallel to the line LIN1. The sensors installed in building structure and belonging to the group GRP1 may be positioned substantially on a line LIN1, which is substantially parallel to the direction of the temperature gradient in said building structure. The orientation of the line LIN1 may be selected such that a distance between the inner surface INSRF and the outer surface EXTSRF is minimized, when measured along the line LIN1.

$L_1$ denotes the distance between the inner surface INSRF and the outer surface EXTSRF. In other words, $L_1$ denotes the thickness of the wall, roof or floor.

Due to e.g. assembly tolerances, the position of the sensors may deviate from the line LIN1, i.e. the sensors do not need to be exactly on the line LIN1. The sensors belonging to the group GRP1 may be positioned such that a distance between each sensor 100a, 100b, 100c and the line LIN1 is smaller than $0.5 \cdot L_1$. In other words, the positions of the sensor 100a, 100b, 100c of the group GRP1 may be within a cylindrical space, whose axis coincides with the line LIN1, whose length is equal to the distance $L_1$, and whose diameter is equal to the distance $L_1$.

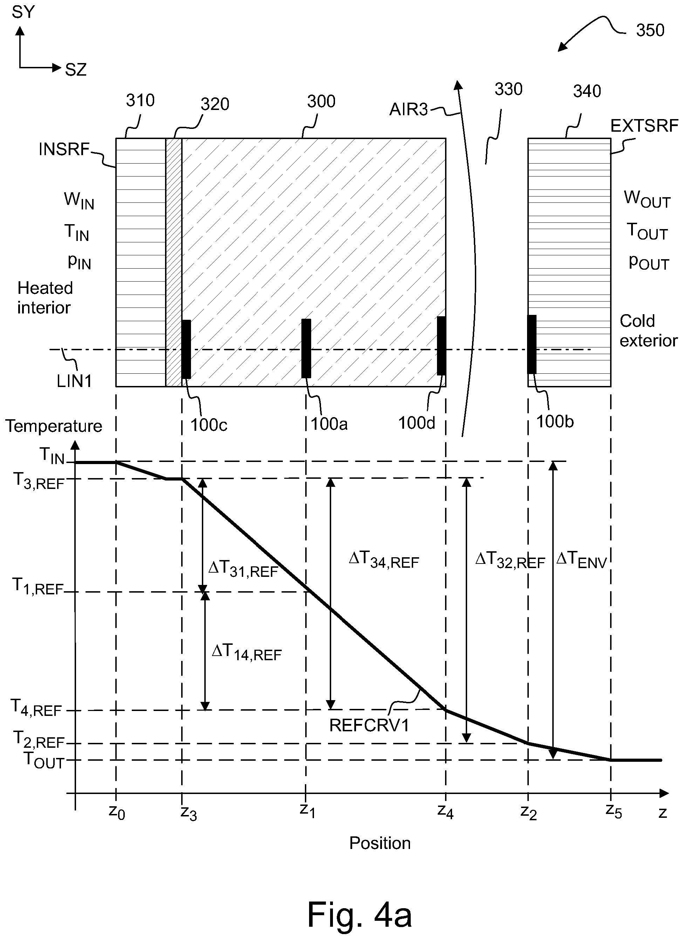

Referring to Fig. 4a, a section of a (wall) structure 350 may comprise an inner liner 310, a moisture barrier 320, a block of thermal insulation 300, a ventilation layer 330 and an outer liner 340.

Fig. 4a shows a reference temperature profile REFCRV1 of a dry building structure. In this case, the building structure may be said to be in a reference condition (or in a reference state). The reference temperature profile REFCRV1 may be determined e.g. based on temperature data obtained from the temperature sensors 100a, 100b, 100c (and 100d).

The sensors 100a, 100b, 100c may be arranged to monitor the spatial temperature profile in a direction SZ, i.e. in a direction, which is substantially perpendicular to the inner surface of the wall structure 350 (or other building structure).

In this case, the internal temperature $T_{IN}$ his higher than the external temperature $T_{OUT}$. The temperature decreases with increasing distance from the inner surface INSRF of the wall 350. $T_{1,REF}$ denotes a (reference) temperature of a first sensor 100a attached to the wall 350, $T_{2,REF}$ denotes a (reference) temperature of a second sensor 100b attached to the wall 350, $T_{3,REF}$ denotes a (reference) temperature of a third sensor 100b attached to the wall 350. $T_{4,REF}$ denotes a (reference) temperature of a fourth sensor 100d.

$z_0$ denotes the location of the inner surface INSRF of the structure 350 and $z_5$ denotes the location of the outer surface EXTSRF of the structure 350. $z_1$, $z_2$, $z_3$, $z_4$ denote the locations of the sensors 100a, 100b, 100c, 100d, respectively. The building 600 and/or the monitoring system 700 may have two or more sensors 100a, 100b arranged to monitor temperature profile(s).

The structure of the building 600 may have three or more sensors 100a, 100b, 100c, 100d arranged to monitor temperature profile.

$\Delta T_{ENV}$ denotes the temperature difference $T_{IN}-T_{OUT}$. $\Delta T_{31,REF}$ denotes the temperature difference

$T_{3,REF}$-$T_{1,REF}$. $\Delta T_{14,REF}$ denotes the temperature difference $T_{1,REF}$-$T_{4,REF}$. $\Delta T_{34,REF}$ denotes the temperature difference $T_{3,REF}$-$T_{4,REF}$. $\Delta T_{32,REF}$ denotes the temperature difference $T_{3,REF}$-$T_{2,REF}$. It is clear that also various other temperature differences may be calculated from the temperatures $T_{IN}$, $T_{1,REF}$, $T_{2,REF}$, $T_{3,REF}$, $T_{4,REF}$, $T_{OUT}$.

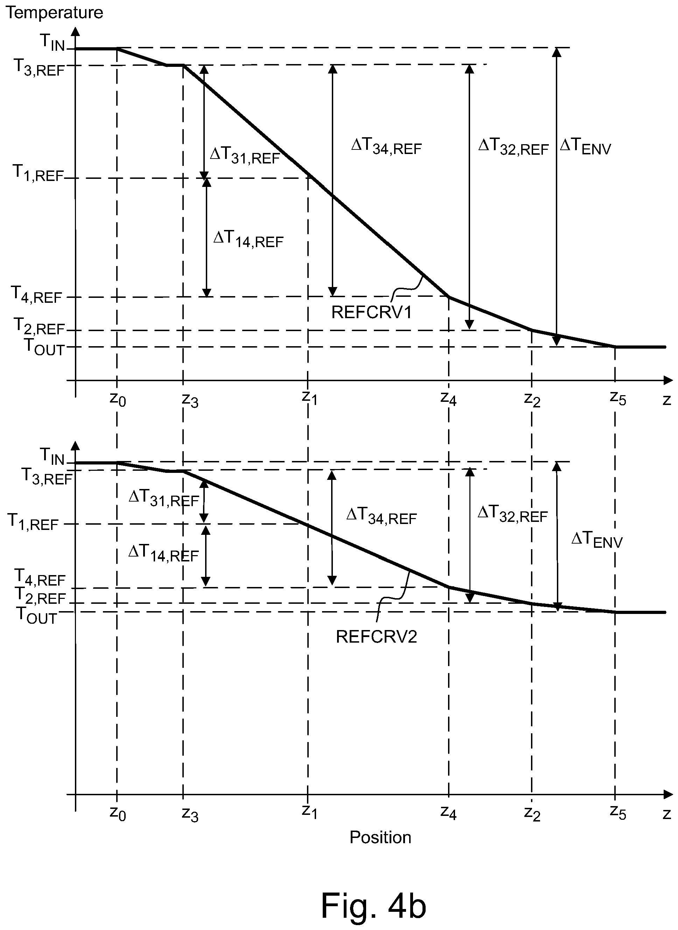

Regarding the temperature profile determined for a building structure, the ratio of a first temperature difference to a second temperature difference may remain constant even when the external temperature $T_{OUT}$ and/or the internal temperature $T_{IN}$ is changed. This behavior is illustrated in Fig. 4b. The upper curve REFCRV1 and the lower curve REFCRV2 are temperature profiles of the same building structure (as shown in Fig. 4a). The dimensions and the thermal conductivity values of the structure are the same for the both curves REFCRV1 and REFCRV2.

In case of the lower curve REFCRV2, the external temperature $T_{OUT}$ has been changed when compared with the upper curve REFCRV1. It may be noticed that the mutual ratios of the temperature differences may remain constant even when the external temperature $T_{OUT}$ (and/or the internal temperature $T_{IN}$) is substantially changed. The temperature profile REFCRV2 may be obtained by shifting and/or compressing (expanding) the profile REFCRV1 in the vertical direction. Visually, it may be noticed that the curves REFCRV1, REFCRV2 have the same shape even though the curve REFCRV2 may be shifted, expanded and/or compressed in the vertical direction.

In particular, a reference ratio $R_{REF}$ may be determined from the temperatures in a reference situation e.g. as follows:

$$R_{REF} = \frac{T_{3,REF} - T_{1,REF}}{T_{3,REF} - T_{2,REF}} \qquad (1a)$$

An abnormal condition of the building structure may be detected by comparing measured temperature information with reference information. In particular, a measured temperature value $T_1$ determined from temperature data obtained from the sensor 100a may be compared with a reference temperature value $T_{1,REF}$ in order to detect an abnormal condition.

The reference temperature value $T_{1,REF}$ applicable in a monitoring situation may depend on the internal temperature $T_{IN}$ and on the external temperature $T_{OUT}$. For example, a (first) reference temperature $T_{1,REF}$ may be equal to 11 °C when $T_{IN}$=20°C and $T_{OUT}$=0°C.

When the external temperature $T_{OUT}$ is changed from 0°C to 10°C ($T_{IN}$=20°C), a different reference temperature $T_{1,REF}$ may be used. In this case the reference temperature $T_{1,REF}$ which should be used may be e.g. equal to 16°C.

If the building structure does not change state (e.g. does not become wet), the reference ratio $R_{REF}$ may remain constant even when the internal temperature $T_{IN}$ and/or the external temperature $T_{OUT}$ is changed. This may allow calculation of a reference value $T_{1,REF}$, which is applicable in a situation where the temperature $T_2$ measured by the sensor 100b and/or the temperature $T_3$ measured by the sensor 100c has been changed.

$$T_{1,REF} = T_3 - R_{REF}(T_3 - T_2) \qquad (1b)$$

In other words, the suitable reference temperature value $T_{1,REF}$ may be determined e.g. from measured values $T_2$, $T_3$ by using the reference ratio $R_{REF}$ determined from the equation (1a).

The equation (1b) allows calculation of the reference value $T_{1,REF}$ in a situation where the internal and/or external temperatures have been changed. The equation (1a) may be used e.g. when $T_{2,REF} = 0$°C and the equation (1b) may be used e.g. when $T_2 = 10$°C. The value of $T_{1,REF}$ determined by the equation (1b) may be substantially different from the value of $T_{1,REF}$ used in the equation (1a).

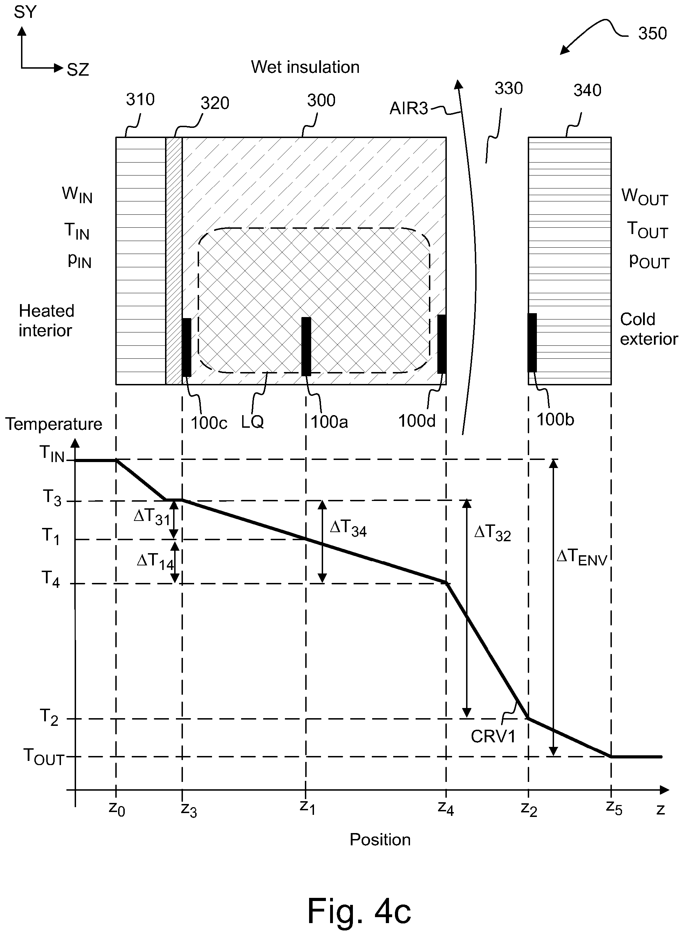

Referring to Fig. 4c, moisture LQ may penetrate into a building structure. In particular, moisture may penetrate into the thermal insulation 300. The moisture may modify the temperature profile across the structure.

The presence of moisture LQ may be detected e.g. by comparing the temperature profile of Fig. 4c with the reference temperature profile REFCRV1 or REFCRV2. The measured temperature profile CRV1 may be determined based on temperature data obtained from the sensors 100a, 100b, 100c.

$T_4$ denotes a measured temperature of the fourth sensor 100d. $\Delta T_{ENV}$ denotes the temperature difference $T_{IN}$-$T_{OUT}$. $\Delta T_{31}$ denotes the temperature difference $T_3$-$T_1$. $\Delta T_{14}$ denotes the temperature difference $T_1$-$T_4$. $\Delta T_{34}$ denotes the temperature difference $T_3$-$T_4$. $\Delta T_{32,REF}$ denotes the temperature difference $T_3$-$T_2$.

An abnormal condition of the structure may be detected by comparing measured temperature information with reference temperature information.

In particular, the presence of moisture LQ may be detected by comparing measured temperature information with reference temperature information.

The apparatus 700 may be arranged to provide an alarm and/or a control operation based on a comparison between measure temperature information and reference temperature information. In particular, the apparatus 700 may be arranged to provide an alarm and/or a control operation if a measured temperature value $T_1$ is greater than or smaller than a reference value $T_{1,REF}$.

The reference value $T_{1,REF}$ may depend on the external temperature $T_{OUT}$. The reference value $T_{1,REF}$ may be determined by using knowledge about the external temperature $T_{OUT}$ and/or about the internal temperature $T_{IN}$. Referring to the curve REFCRV1 or REFCRV2, the reference value $T_{1,REF}$ may be obtained e.g. by interpolation when knowledge about the internal temperature $T_{IN}$ and about the external temperature $T_{OUT}$ is available. Referring to the curve REFCRV1 or REFCRV2, the reference value $T_{1,REF}$ may be obtained e.g. by interpolation when knowledge about the temperatures $T_2$, $T_3$ at the locations $z_2$, $z_3$ is available.

Advantageously, the sensor 100a may be positioned at a location where the temperature substantially deviates from the inner temperature $T_{IN}$ and from the external temperature $T_{OUT}$ in the reference state of the building structure. The reference state may also be called as the normal condition of the building structure. The sensor 100a may be positioned e.g. such that the temperature $T_{1,REF}$ of the sensor 100a is between the temperatures $T_{OUT} + 0.2 \cdot (T_{IN}-T_{OUT})$ and $T_{OUT} + 0.8 \cdot (T_{IN}-T_{OUT})$ in the reference state. The difference between the temperatures $T_{IN}$ and $T_{1,REF}$ may be e.g. greater than or equal to 20% of the temperature difference $T_{ENV}$ between the temperatures $T_{IN}$ and $T_{OUT}$, and the difference between the temperatures $T_{1,REF}$ and $T_{OUT}$ may be greater than or equal to 20% of the temperature difference $T_{ENV}$ between the temperatures $T_{IN}$ and $T_{OUT}$.

Advantageously, the sensor 100b (and/or the sensor 902) may be positioned such that the temperature $T_{2,REF}$ of the sensor 100b is close to the external temperature $T_{OUT}$. A temperature difference $T_2-T_{OUT}$ between the temperature $T_{2,REF}$ of the second temperature sensor 100b and the external temperature $T_{OUT}$ may be smaller than 20% of a temperature difference $T_{ENV}$ between the internal temperature $T_{IN}$ and the external temperature $T_{OUT}$ in the reference state.

Advantageously, the sensor 100c may be positioned such that the temperature of the sensor 100c is close to the internal temperature $T_{IN}$. A temperature difference $T_{IN}-T_{3,REF}$ between the internal temperature $T_{IN}$ and the temperature $T_{3,REF}$ of the sensor 100c may be smaller than 20% of a temperature difference $T_{ENV}$ between the internal temperature $T_{IN}$ and the external temperature $T_{OUT}$ in the reference state.

The sensors 100a, 100b and 100c may be positioned such that the temperature $T_{1,REF}$ of the sensor 100a substantially deviates from the temperature $T_{2,REF}$ of the sensor 100b in the reference state, and/or such that the temperature $T_{1,REF}$ of the sensor 100a substantially deviates from the temperature $T_{3,REF}$ of the sensor 100c in the reference state. The absolute value of a temperature difference $T_{1,REF}-T_{2,REF}$ may be e.g. greater than 20% of the absolute value of a temperature difference $T_{ENV}$. Also the absolute value of a temperature difference $T_{3,REF}-T_{1,REF}$ may be e.g. greater than 20% of the absolute value of a temperature difference $T_{ENV}$.

Interpolation coefficients (i.e. an interpolation function) may be determined e.g. by measuring temperatures of the sensors 100a, 100b, 100c in the reference state of Fig. 4a. The interpolation coefficients (interpolation function) may be stored in a memory. The interpolation coefficients (interpolation function) associated with the sensors 100a, 100b, 100c may be subsequently retrieved from a memory (e.g. REFDATA from MEM9, see Fig. 10b) based on identification data ID1, ID2, ID3 obtained from at least one of the sensors 100a, 100b, 100c.

Several reference values corresponding to different external temperatures may be determined and stored in a memory. A suitable reference value $T_{1,REF}$ may be subsequently retrieved from the memory e.g. according to a measured temperature $T_2$ or $T_{OUT}$.

Variations in the external temperature $T_{OUT}$ may be large, and it may be advantageous to take the variations of the temperature $T_{OUT}$ into account by obtaining temperature data from a sensor, whose temperature is relatively close to the external temperature $T_{OUT}$. In particular, temperature data may be obtained from the sensor 100b, from the sensor 100d and/or from the sensor 902 (Fig. 1).

However, in certain cases, it is not necessary to monitor the internal temperature $T_{IN}$, because variations in the internal temperature $T_{IN}$ may be relatively small. For example, the internal temperature $T_{IN}$ may be simply assumed to have a predetermined value (e.g. 20°C). Furthermore, the temperature $T_3$ at the location $z_3$ may be simply assumed to have a predetermined value (e.g. 20°C). Thus, condition of a building structure may be monitored by obtaining temperature data from only two temperature sensors 100a, 100b, wherein the first sensor 100a may be embedded within the structure such that the temperature of the first sensor substantially deviates from the external temperature $T_{OUT}$, and the second sensor 100b may be positioned such that the temperature of the second sensor 100b is close to the external temperature $T_{OUT}$.

The abnormal condition may be detected by comparing measured temperature information with reference temperature information. The measured temperature information may be determined e.g. from temperature data obtained from the sensor 100a. The reference temperature information may be determined e.g. from temperature data obtained from the sensor 100b. The measured temperature information may be e.g. a temperature value $T_1$, a temperature difference $\Delta T_{31}$, (or $\Delta T_{14}$) a ratio R of temperature differences, or a slope of a first portion of a temperature profile. The reference temperature information may be e.g. a reference value $T_{1,REF}$, a reference temperature difference $\Delta T_{31,REF}$, a reference ratio $R_{REF}$, or a slope of a second portion of a temperature profile.

A measured temperature difference (e.g. $\Delta T_{31}$ shown in Fig. 4c) may be compared with a reference value (e.g. $\Delta T_{31,REF}$) in order to detect an abnormal condition. A reference value $\Delta T_{31,REF}$ for the comparison operation may be determined by multiplying the reference ratio $R_{REF}$ obtained from the equation (1a) with the measured temperature difference $T_3$-$T_2$.

A ratio R of temperature differences may be calculated by using temperature values measured in the situation of Fig. 4c:

$$R = \frac{T_3 - T_1}{T_3 - T_2} \tag{2}$$

The ratio R may also be called as a "relative temperature difference" or a "normalized temperature difference". The relative temperature difference R may provide information about the relative contribution of the thermal insulation to the overall temperature difference prevailing between the locations $z_3$ and $z_2$. If the relative temperature difference R is close to 0% (or smaller than a predetermined value), this may be interpreted to indicate that the insulating properties of the element 300 are poor e.g. due to moisture or because the element 300 has been compressed too much.

The ratio R obtained from equation (2) may be compared with the reference ratio obtained from equation (1a). For example, the monitoring apparatus 700 may be arranged to provide an alarm if the ratio R is smaller than or greater than the reference value $R_{REF}$.

By comparing the ratio R with the reference value $R_{REF}$, it may be noticed that the relative temperature difference over the thermal insulation 300 is substantially smaller in case of Fig. 4c, when compared with the situation of Fig. 4a. The measured ratio R may be compared with the reference ratio $R_{REF}$ in order to detect an abnormal condition of the building structure.

The presence of water in the thermal insulation 300 may substantially increase thermal conductivity, which in turn may substantially decrease the relative temperature difference over the insulation 300.

The presence of water in the building element 300 may be detected by comparing the temperature profile with a reference temperature profile.

Instead of making actual temperature measurements in a reference situation, a reference temperature profile REFCRV1 may also be determined by theoretical calculations. The reference temperature profile REFCRV1 may be determined by using assumed or measured dimensions of the structure and by using assumed or measured thermal conductivity values of the structure. In particular, the value of the reference ratio $R_{REF}$ may be determined by using knowledge about the dimensions and materials of the structure.

The value of $\Delta T_{31,REF}$ and/or $T_{1,REF}$ may be calculated by using the measured values of $T_2$ and $T_3$ and by using knowledge about the reference ratio $R_{REF}$.

A measured temperature value $T_1$ may be compared with a reference value $T_{1,REF}$ in order to detect an abnormal condition of the building structure.

A measured temperature difference $\Delta T_{31}$ may be compared with a reference value $\Delta T_{31,REF}$ in order to detect an abnormal condition of the building structure.

If the measured information substantially deviates from the reference information this may indicate an abnormal condition. If the measured information substantially deviates from the reference information this may indicate the presence of moisture LQ in the structure.

Determining the temperature profile may also comprise using temperature information obtained from one or more conventional thermometers. Determining the temperature profile may further comprise using temperature information obtained e.g. from a battery-powered temperature sensor and/or by using temperature information which is communicated from a temperature sensor via (long) electrical cables. In particular, the inner temperature $T_{IN}$ and the external temperature $T_{OUT}$ may be determined by using conventional thermometers (see the sensors 902, 903 shown in Fig. 1).

A method for monitoring condition of a building structure (350, 380, 390), may comprise:

- measuring a first temperature value ($T_1$),
- measuring a second temperature value ($T_2, T_{OUT}$),
- measuring a third temperature value ($T_3, T_{IN}$),
- determining a reference value ($T_{1,REF}$) from the second temperature value ($T_2, T_{OUT}$) and from the third temperature value ($T_3, T_{IN}$), and
- comparing the first temperature value ($T_1$) with the reference value ($T_{1,REF}$) in order to detect an abnormal condition of the structure (350, 380, 390),

wherein the first temperature value ($T_1$) is determined from data obtained from an RFID sensor (100a) attached to the structure (350, 380, 390), and wherein the sensor (100a) is arranged to extract operating energy from a radio frequency field (ROG).

The method for monitoring condition of a building structure may comprise:

- measuring a first temperature value $T_1$ by using data obtained from the sensor 100a,
- measuring a second temperature value $T_2$ by using data obtained from a sensor 100b,
- measuring a third temperature value $T_3$ by using data obtained from a sensor 100c,
- determining a reference temperature profile REFCRV1 by using the second temperature value $T_2$ and the third temperature value $T_3$,
- determining a temperature profile CRV1 from the first temperature value $T_1$, from the second temperature value $T_2$ and from the third temperature value $T_3$, and
- comparing the temperature profile CRV1 with the reference temperature profile REFCRV1 in order to detect an abnormal condition of the building structure.

In an embodiment, the second temperature value $T_1$ and/or the third temperature value $T_3$ may also be measured by using data obtained from one or more conventional thermometers (902, 903).

In case of a heated building, the moisture concentration $W_{IN}$ inside the building 600 is typically higher than the moisture concentration $W_{OUT}$ outside the building 600. For example, moisture of breathing, sweat from people and animals, evaporation from plants, evaporation from a bathroom and/or wet laundry may increase the moisture concentration $W_{IN}$ inside the building 600.

Moisture carried by air may condense at a temperature called as the "dew point". If air from the inside penetrates into colder portions of the thermal insulation, the moisture may condense to the insulation. The wall structure 350 may comprise the moisture barrier 320 in order to minimize such condensation.

The moisture barrier 320 may have gaps which may allow leaking of water vapor. Some wall structures may be implemented without the moisture barrier 320. If the pressure $p_{IN}$ inside the building 600 is greater than the pressure $p_{OUT}$ outside the building, the air from the interior of the building may start to flow through the wall so that moisture is condensed inside the wall 350. The pressure $p_{IN}$ inside the building 600 may be kept slightly lower than the pressure $p_{OUT}$ outside the building, in order to reduce the risk of condensation within a building element 300.

Referring to Fig. 5a, a reader 200 and/or the auxiliary unit 400 may comprise a display 501 for displaying temperature information. First temperature information TINF1 may be determined based on temperature data TDATA1 obtained from a first sensor 100a. Second temperature information TINF2 may be determined based on temperature data TDATA2 obtained from a second sensor 100b. Third temperature information TINF3 may be determined based on temperature data TDATA3 obtained from a third sensor 100c.

The temperature information TINF1 may be displayed such that it is associated with a first identifier F1. The temperature information TINF2 may be displayed such that it is associated with a second identifier F2. The temperature information TINF3 may be displayed such that it is associated with a third identifier F3. The identifiers F1, F2, F3 may specify e.g. identity and/or location of a sensor 100a, 100b, 100c, respectively. The location and/or identity of a sensor may be indicated e.g. by displaying a symbol "LOC1-C", "LOC1-A", "LOC1-B". Alternatively, the location and/or identity of a sensor may be indicated e.g. by displaying position coordinates or by displaying a verbal description of the position.

The displayed temperature information TINF1, TINF2, TINF3 may be related to the same temperature profile, i.e. the sensors 100a, 100b, 100c may belong to the same group. In that case it may be sufficient to display only one identifier (e.g. F1) to indicate the locations of the sensors 100a, 100b, 100c.

The display 501 may also be arranged to display additional information AINF1, AINF2, AINF3. For example, displaying a text "ALARM" may indicate an abnormal temperature. For example, displaying a text "OK" may indicate a normal temperature.

The system 700, in particular the reader 200 may be arranged to provide first temperature information TINF1 based on the first temperature data TDATA1 (TINF1 may also be equal to TDATA1).

The system 700, in particular the reader 200 may be arranged to provide second temperature information TINF2 based on the second temperature data TDATA2 (TINF2 may also be equal to TDATA2).

The system 700, in particular the reader 200 may be arranged to provide third temperature information TINF3 based on the third temperature data TDATA3 (TINF3 may also be equal to TDATA3).

The system 700, in particular the reader 200 may be arranged to provide a first identifier F1 based on the first identification data ID1 (F1 may also be equal to ID1).

The system 700, in particular the reader 200 may be arranged to provide a second identifier F2 based on the second identification data ID2 (F2 may also be equal to ID2).

The system 700, in particular the reader 200 may be arranged to provide a third identifier F3 based on the third identification data ID3 (F3 may also be equal to ID3).

When using several sensors 100a, 100b, 100c, temperature data obtained from the sensors may be processed effectively and reliably when temperature data obtained from a sensor is associated with identification data obtained from the same sensor.

The temperature data TDATA1 obtained from the first sensor 100a may be e.g. displayed such that the data TDATA1 is associated with the identification data ID1. The temperature data TDATA and the identification data are typically numerical codes, i.e. not in a very user-friendly format. The identifiers F1, F2, F3 and/or the temperature information TINF1, TINF2, TINF3 may be determined such that they are more illustrative to a human user. For example, the identifiers and the temperature information may be presented as graphical symbols.

Referring to Fig. 5b, the display 501 may also be arranged to display corresponding reference temperature information TREF, TREF2, in addition to displaying temperature information TINF1, TINF2, TINF3 and/or one or more identifiers F1, F2, F3.

Referring to Fig. 5c, the display 501 may be arranged to display the measured temperature profile as a graphical curve CRV1. The measured curve CRV1 may be shown together with a reference curve REFCRV1. The curve CRV1 may represent e.g. the temperatures $T_1$, $T_2$, $T_3$ shown in Fig. 4c, and the curve REFCRV1 may represent e.g. the temperatures $T_{1,REF}$, $T_{2,REF}$, $T_{3,REF}$ shown in Fig. 4a. The curve REFCRV1 may also visually show the temperature differences $T_3-T_1$ and $T_1-T_2$.

The display 501 may be arranged to display an identifier F1, which specifies the location of at least one sensor 100a, 100b, 100c. The display 501 may be arranged to display additional information AINF1, e.g. a text "ALARM".

If a comparison between measured information and reference temperature information indicates an abnormal condition, a user may start to seek for a remedy. For example, heating of the building may be adjusted. The ventilation may be adjusted. The roof may be inspected in order to find possible leaks. A wet building element may be replaced and/or the structure of the building may be re-designed.

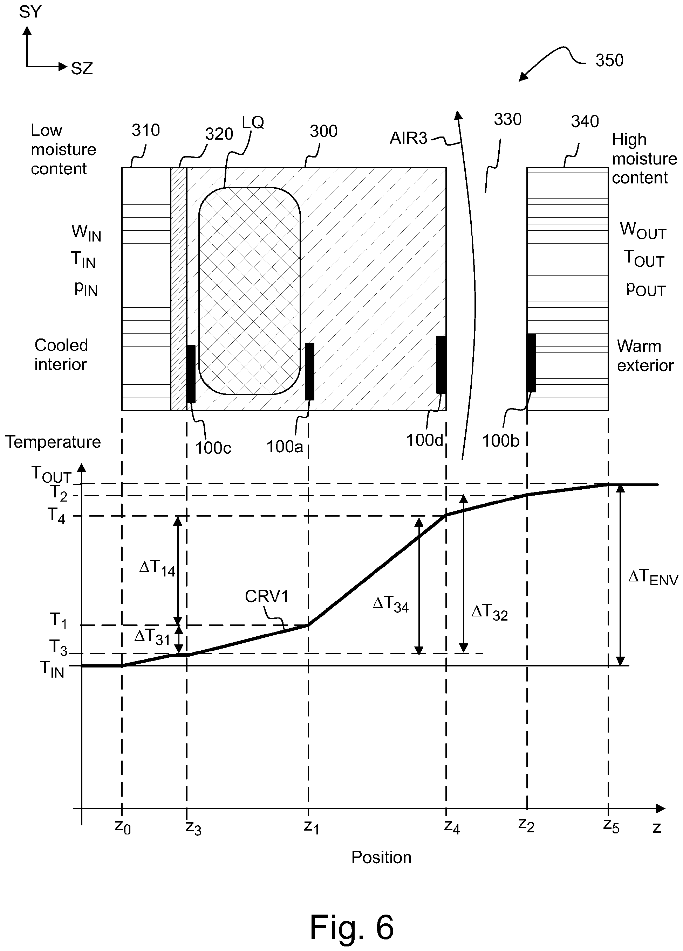

Referring to Fig. 6, the interior of a building 600 may also be cooled, i.e. the temperature $T_{IN}$ inside the building 600 may be lower than the temperature $T_{OUT}$ outside the building. The moisture concentration $W_{IN}$ inside the building 600 may be lower than the moisture concentration $W_{IN}$ outside the building.

In this situation, moisture LQ may condense to a building element 300 near the inner surface of the wall 350. The resulting change in the thermal conductivity of the building element 300 may lead to an anomalous temperature profile. The abnormal condition may be detected by comparing the measured temperature profile with a reference temperature profile. Thus, the presence of moisture in the building element 300 may be detected by comparing the temperature profile with a reference temperature profile.

The situation may be remedied e.g. by removing the moisture barrier 320 from the vicinity of the inner surface of the wall 350, by adding a moisture barrier 320 close to the outer surface of the wall 350, by increasing the internal pressure $p_{IN}$ and/or by increasing the internal temperature $T_{IN}$.

In the situation of Fig. 4c, it may be noticed that the slope of a portion of the temperature profile CRV1 between the locations $z_3$ and $z_1$ is substantially equal to the slope of a portion of the temperature profile between the locations $z_1$ and $z_4$. This may be interpreted to indicate that the thermal conductivity within the thermal insulation element 300 is spatially uniform in the direction SZ. By comparison, Fig. 6 shows a temperature profile in a situation where the thermal conductivity within the thermal insulation element 300 is spatially non-uniform.

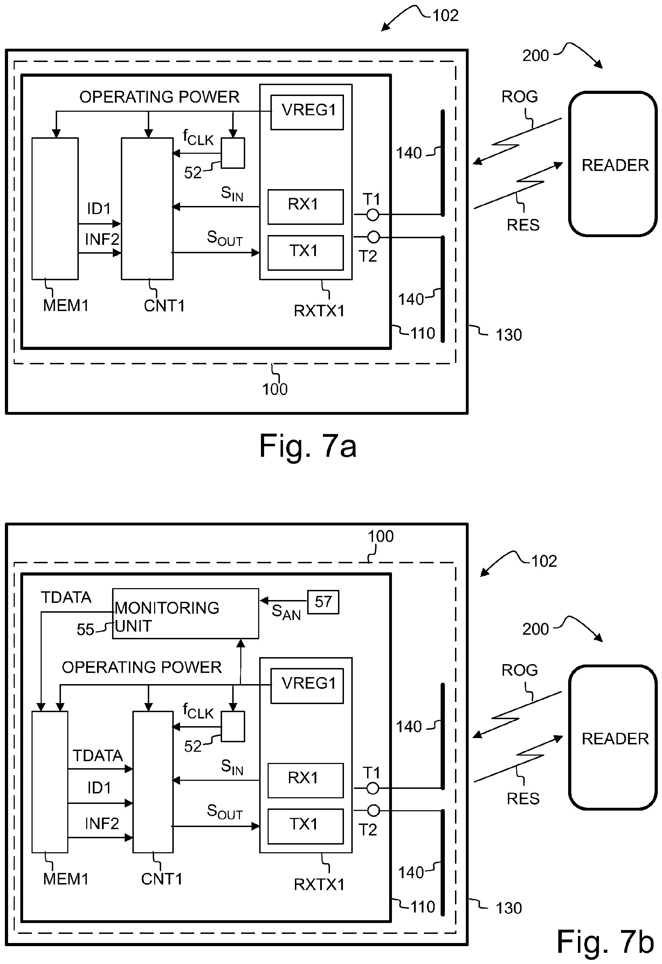

The temperature sensor 100a, 100b, and/or 100c may be e.g. a temperature-measuring RFID transponder 100 shown in Fig 7a or 7b.

Fig. 7a shows an RFID transponder, which comprises a local oscillator 52. Temperature data may be determined e.g. based on temperature-dependent frequency $f_{CLK}$ of a local oscillator 52.

Fig. 7b shows an RFID transponder, which comprises a temperature monitoring unit 55 connected to a temperature sensor element 57. The temperature sensor element 57 may be e.g. a temperature-dependent resistor. In particular, the temperature sensor element 57 may comprise a thermocouple, NTC resistor, PTC resistor, "Pt100" element or a P-N-junction. NTC means "negative temperature coefficient" and PTC means "positive temperature coefficient". Pt100 refers to a temperature-dependent resistive platinum sensor element.

Referring to Figs. 7a and 7b, an RFID transponder 100 may comprise one or more antenna elements 140 connected to an RFID chip 110.

The transponder 100 may be optionally attached to a substrate 130 so as to form an RFID tag 102. The substrate 130 may be e.g. a plastic film, paper, or cardboard. The substrate 130 may be adhesive-lined so as to form an adhesive label. The transponder 100 may comprise protective layers to form a sealed structure. The transponder 100 may encapsulated so as to withstand various environmental conditions, e.g. moisture and/or other corrosive substances.

The transponder 100 may be arranged to send a response RES to an interrogation signal ROG. The interrogation signal ROG may be sent from a mobile reader 200 or a stationary reader 200. In particular, the mobile reader may be a portable reader.

The reader 200 and the transponder 100 may be arranged to communicate e.g. according to the EPC Gen2 protocol. EPC Gen2 is a abbreviation for "EPCglobal UHF Class 1 Generation 2". The protocol has been incorporated e.g. in the standard ISO 18000-6C (frequency band 860-960MHz). (Reference is made to the latest versions of the protocol and standard as in force on 29 April 2011).

The transponder 100 may comprise an RFID chip 110 connected to one or more antenna elements 140 via terminals T1, T2. The chip 110 may refer to a semiconductor element, which comprises e.g. resistors and transistors.

Electromagnetic interrogation signal ROG transmitted in a wireless manner is converted into an electrical signal by the antenna elements 140. The chip 110 may comprise a radio frequency unit RXTX1, a control unit CNT1, and a memory MEM1. The radio frequency unit RXTX1 may comprise a signal receiver RX1, and a signal transmitter TX1. The receiver RX1 may also be called as a signal demodulator. The transmitter TX1 may also be called as a signal modulator. The radio frequency unit RXTX1 may also be called as an analog radio frequency interface. The radio frequency unit RXTX1 may comprise connection terminals T1, T2, which may be connected to at least one antenna element 140. The antenna elements may from e.g. a dipole antenna (Fig. 2a) or an inductive antenna (coil antenna, Fig. 2b). The radio frequency unit RXTX1, the control unit CNT1, the memory MEM1, and a local oscillator 52 may be implemented on the same semiconductor chip 110.

The receiver RX1 may provide an input signal $S_{IN}$ based on the received interrogation signal ROG.

The control unit CNT1 may be arranged to enable transmission of first information ID1 e.g. when the input signal $S_{IN}$ contains a first (correct) password code (which matches with a reference code previously stored in the chip 110). The first information ID1 may comprise e.g. identification data of the transponder 100. The identification data ID1 may comprise e.g. an electronic item code (EPC). A unique electronic item code assigned to an item may be stored in a transponder 100 as a binary number.

Optionally, the control unit CNT1 may be arranged to enable transmission of second information INF2 e.g. when the input signal $S_{IN}$ contains a second (correct) password code (which matches with a reference code previously stored in the chip 110). The second information INF2 may comprise e.g. temperature data, reference temperature data, location data and/or calibration data. The second information INF2 may comprise a capability parameter, which specifies e.g.

- whether the transponder is capable of monitoring temperatures and/or changes in temperature,
- whether calibration data for the transponder exists,
- calibration data, and/or
- identification code for relevant calibration data.

The second information INF2 may be stored in the memory MEM1 of the transponder 100.

The response RES transmitted by the transponder 100 may comprise the first information ID1 and/or the second information INF2. The information ID1 and/or INF2 may be retrieved from the memory MEM1 by the control unit CNT1. The control unit CNT1 may send an output signal $S_{OUT}$ to the radio frequency unit RXTX1. The output signal $S_{OUT}$ may comprise the information INF2. The transmitter TX1 may generate the radio-frequency response RES based on the output signal $S_{OUT}$. The input signal $S_{IN}$ and the output signal $S_{OUT}$ may be e.g. digital signals.

A dipole antenna (Fig. 2) may transmit information from the transponder 100 to a reader 200 by back scattering. Alternatively, an inductive antenna (Fig. 3) may be used. A coil antenna of the transponder 100 may cause modulation of the load for the reader 200. This modulation can be used for transmitting data from the transponder 100 to the reader 200.

The transponder 100 may substantially passive, i.e. the radio frequency unit RXTX1 may be powered by energy extracted from an incoming radio frequency signal, i.e. the radio frequency unit RXTX1 may operate without a battery. The transponder 100 may be powered e.g. by electro-magnetic energy transmitted from the reader 200. The combination of an antenna structure 140 and a radio frequency unit RXTX1 of a transponder 100 may be arranged to provide operating power for the transponder 100 by extracting energy of an in-coming electromagnetic signal ROG. The radio frequency unit RXTX1 may comprise a voltage supply VREG1, which is arranged to extract operating power from an incoming radio frequency signal. In particular, the voltage supply VREG1 may be arranged to extract operating power from the interrogation signal ROG. The operating power may be distributed to from the voltage supply VREG1 to the radio frequency unit RXTX1. Optionally, operating power may be distributed from the voltage supply VREG1 to the control unit CNT1 and to the memory MEM1.

Consequently, operating lifetime may be very long. Operating lifetime refers to a time when the transponder is capable of responding to an interrogation signal. In fact, the operating lifetime may be substantially infinite. There is no need to change a battery during the operating lifetime of the transponder. The transponder may be very small, as there it is not necessary to reserve a considerable space for the battery.

The transponder may be substantially passive, i.e. energy for operating the radio frequency unit RXTX1, the temperature monitoring unit 55, the control unit CNT1, the local oscillator 52, and the memory MEM1 may be extracted from a radio frequency field. Energy for operating the radio frequency unit RXTX1, the temperature monitoring unit 55, the control unit CNT1, the local oscillator 52, and the memory MEM1 may be extracted an interrogation signals ROG sent from a reader 200.

A passive transponder 100 may comprise a capacitor or a rechargeable battery for storing operating energy extracted from an interrogation signal ROG. Operating energy for operating the radio frequency unit RXTX1, the temperature monitoring unit 55, the control unit CNT1, the local oscillator 52, and the memory MEM1 may be extracted from one or more interrogation signals ROG sent from one or more readers 200.

The local oscillator 52 may be used as the temperature monitoring unit 55 when the clock frequency $f_{CLK}$ of the local oscillator 52 depends on the temperature of the chip 110.

A carrier frequency of the response RES may be modulated at a modulation frequency $f_{LF}$. The modulation frequency $f_{LF}$ may also be called as a "link frequency".

The modulation frequency $f_{LF}$ of the response RES may, in turn, depend on the clock frequency $f_{CLK}$ of a local oscillator 52. Thus, also the modulation frequency $f_{LF}$ may depend on the temperature of the chip 110. A change of the modulation frequency $f_{LF}$ may indicate a change in the temperature.

The local oscillator 52 may be e.g. a ring oscillator. A ring oscillator may comprise e.g. a plurality of cascaded logical gates whose operating speed depends on the temperature. The local oscillator 52 may be e.g. a relaxation oscillator.

Referring to Fig. 7b, the transponder 100 may comprise a temperature sensor element 57, which is different from the local oscillator 52. The temperature sensor 57 may comprise e.g. a P-N junction, a resistive element, whose resistance depends on the temperature, or a thermocouple. The resistive element may be e.g. a NTC or PTC resistor (NTC refers to negative temperature coefficient, and PTC refers to positive temperature coefficient. The resistive element may be a Pt100 sensor.

The temperature monitoring unit 55 may be arranged to convert an analog signal $S_{AN}$ provided by the temperature sensor element 57 into a digital signal, which may be stored in the memory MEM1 of the transponder and/or into a digital signal which may be sent via the radio frequency unit RXTX1. Thus, the temperature monitoring unit 55 may be an analog-to-digital converter.

The temperature sensor element 57 and the temperature monitoring unit 55 may be powered by energy extracted from a radio frequency field. The temperature sensor element 57 and the temperature monitoring unit 55 may be powered by energy extracted from a radio frequency field of one or more interrogation signals ROG.

Advantageously, the temperature monitoring unit 55 may be integrated in the RFID chip 110. However, also a separate temperature monitoring unit 55 of a transponder 100 may be connected to terminals of the chip 110. The temperature monitoring unit 55 may be implemented on a second semiconductor chip which is separate from a first chip 110, wherein the first chip 110 may comprise the radio frequency unit RXTX1 used for transmitting the response RES. The digital signal provided by the temperature monitoring unit 55 may be coupled to the chip 110 via the terminals.

The temperature monitoring unit 55 may be arranged to generate a temperature-dependent digital signal TDATA by using operating energy extracted from a radio frequency field, in particular by using operating energy extracted from an interrogation signal ROG.

The temperature monitoring unit 55 may be arranged to convert an analog temperature signal provided by the sensor element 57 into a digital signal comprising temperature data TDATA. The temperature data TDATA may be stored in a memory MEM1 e.g. as digital data, in particular as binary data.

The analog to digital conversion in the transponder 100 (by the temperature monitoring unit 55) may be carried out by using energy extracted from a radio frequency field coupled to the antenna 140 of the transponder 100. In particular, the analog-to-digital conversion may be carried out by using energy extracted from an interrogation signal ROG coupled to the antenna 140 of the transponder 100.

The transponder may comprise a temperature monitoring unit (52, 55) arranged to generate the temperature-dependent digital signal ($f_{CLK}$, $N_C$, TDATA) by using operating energy extracted from a radio frequency field (ROG).

The temperature monitoring unit (52, 55) may be arranged

- to obtain a temperature-dependent analog signal from a temperature sensor element (57), and
- to convert the temperature-dependent analog signal into the temperature-dependent digital signal (TDATA) by using operating energy extracted from the radio frequency field (ROG).

The frequency of the electromagnetic radio frequency field may be e.g. greater than or equal to 100 kHz, in particular greater than or equal to 1 MHz. The frequency of the electromagnetic radio frequency field may be substantially equal to the carrier frequency of the interrogation signal ROG.

A signal RES provided by a transponder 100 corresponds to the temperature of the temperature sensor element 57 or the temperature of the local oscillator 52. When the element 57 or the oscillator 52 is in thermal connection with a portion of a building element 300, the temperature data obtained from the transponder 100 may be used for monitoring temperature of said portion.

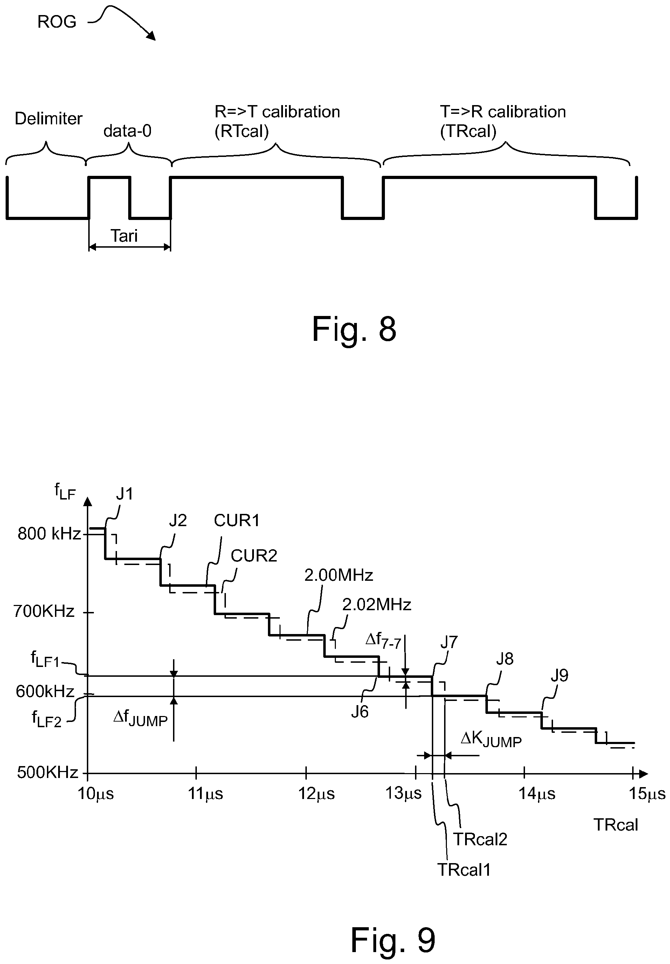

Figs. 8 and 9 describe how temperature data can be obtained based on frequency of the local oscillator 52.

Referring to Fig. 8, an interrogation signal ROG sent from a reader 200 to a transponder 100 may comprise a frequency-setting parameter TRcal (reference is made to the EPC Gen2 protocol). The transponder 100 may be arranged to set a modulation frequency ("link frequency") $f_{LF}$ based on the value of the parameter TRcal. The value of the TRcal may be directly proportional to the temporal duration of the data sequence TRcal. The value of the parameter TRcal may be e.g. 50 $\mu$s.

The "Delimiter", "data-0", "Tari", and "RTcal" may refer to other portions of the interrogation signal ROG, as defined in the EPC Gen2 protocol.

The transponder 100 may be arranged to set the modulation frequency $f_{LF}$ according to the following equation:

$$f_{LF} = \frac{DR}{TRcal} \qquad (3a)$$

The modulation frequency $f_{LF}$ may also be called as a "backscatter link frequency" BLF.

In practice, the transponder may be arranged to calculate the modulation frequency $f_{LF}$ by using integer numbers as follows:

$$f_{LF} = \frac{DR \cdot f_{CLK}}{ROUND(TRcal \cdot f_{CLK})} \qquad (3b)$$

where DR denotes a division ratio parameter. The value of the division ratio parameter DR may be e.g. 8 or 64/3. $f_{CLK}$ denotes the frequency of the local oscillator 52. ROUND denotes a rounding or truncating function, i.e. it rounds or truncates an arbitrary number format to an integer number.

Fig. 9 shows, by way of example, the modulation frequency $f_{LF}$ as a function of the frequency-setting parameter TRcal. The curve CUR1 plotted with the solid line refers to a situation where the clock frequency $f_{CLK}$ is equal to 2.00 MHz. The curve CUR2 plotted with the dashed line refers to a situation where the clock frequency $f_{CLK}$ is equal to 2.02 MHz.

The difference 0.02 MHz difference (1%) in the clock frequency $f_{CLK}$ may be caused by a change of temperature of the local oscillator 52.

When the value of the frequency-setting parameter TRcal is increased, the modulation frequency $f_{LF}$ may decrease in several (abrupt) jumps J1, J2, .., as can be derived from the equation (3b). The jumps may be marked e.g. as J1, J2, J3, J4, J5, J6, J7, J8, J9,... The modulation frequency $f_{LF}$ may be substantially constant between TRcal values corresponding to two adjacent jumps J1, J2, provided that the clock frequency $f_{CLK}$ is constant.

When the clock frequency $f_{CLK}$ increases or decreases due to temperature-induced drift, the modulation frequency $f_{LF}$ may be changed when the TRcal value remains constant. In a region between jumps J6 and J7, the clock frequency $f_{CLK}$ may be changed e.g. by an amount $\Delta f_{7-7}$ shown in Fig. 9. In case of a larger change in the temperature, the curve CUR2 may be shifted sideways with respect to the curve CUR1 such that also a step height $\Delta f_{JUMP}$ is added to the amount $\Delta f_{7-7}$.

When the value of the frequency-setting parameter TRcal is varied by a small amount in the vicinity of a jump (e.g. J7), the clock frequency $f_{CLK}$ being substantially constant, the modulation frequency $f_{LF}$ may be abruptly changed from a first value $f_{LF1}$ to a second value $f_{LF2}$, i.e. by the amount $\Delta f_{JUMP}$.

It may be derived from the equation (3b) that

$$f_{CLK} = \frac{f_{LF1} \cdot f_{LF2}}{DR \cdot (f_{LF1} - f_{LF2})} \qquad (4)$$

In other words, the clock frequency $f_{CLK}$ may be calculated from the upper modulation frequency $f_{LF1}$ and lower modulation frequency $f_{LF1}$ associated with a single jump (e.g. J7).

In particular, the temperature of the local oscillator 52 (and an estimate for the temperature of an item or material attached to the transponder 100) may be determined by using a difference between the first modulation frequency ($f_{LF,1}$) and the second modulation frequency ($f_{LF,2}$).

A first response RES1 modulated at the first frequency $f_{LF1}$ may be provided by sending a first interrogation signal ROG1 from a reader 200 to the transponder 100 such that the first interrogation signal ROG1 comprises a first frequency-setting parameter TRcal1. A second response RES2 from the same transponder 100 modulated at the second frequency $f_{LF2}$ may be provided by sending a second interrogation signal ROG2 from a reader 200 to the transponder 100 such that the second interrogation signal ROG2 comprises a second frequency-setting parameter TRcal2. The second frequency-setting parameter TRcal2 may be different from the first frequency-setting parameter TRcal1 .

The time period between sending the first and second interrogation signals ROG1, ROG2 may be selected to be so short that the temperature of the local oscillator is not significantly changed during said time period.

Thus, a method for monitoring temperatures may comprise:

- sending a first interrogation signal ROG1 and a second interrogation signal ROG2 to the RFID transponder 100,
- receiving a first response signal RES1 from the RFID transponder 100 at a first modulation frequency $f_{LF,1}$ and a second response signal RES2 from the RFID transponder 100 at a second modulation frequency $f_{LF,2}$,
- determining a clock frequency $f_{CLK}$ from the first modulation frequency $f_{LF,1}$ and the second modulation frequency $f_{LF,2}$.

wherein the first response signal RES1 is a response to the first interrogation signal ROG1 and the second response signal RES2 is a response to the second interrogation signal ROG2.

The relationship between clock frequency $f_{CLK}$ and absolute temperature values may be established e.g. by calibration measurements. One or more calibration measurements may provide calibration data. For example, the chip 110 of transponder may be positioned at a known temperature, and the clock frequency $f_{CLK}$ associated with the known temperature may be stored in a memory as calibration data.

Absolute temperature values specify a temperature e.g. in the units of Centigrade, Kelvin or Fahrenheit. An absolute temperature value may be derived from temperature data by using the calibration data.

The chip may be positioned in two or more different temperatures, and corresponding clock frequency values $f_{CLK}$ may be recorded as a function of the temperature.

For example, calibration data may contain e.g. a plurality of pairs, wherein an individual pair may comprise an absolute temperature value $T_{ABS}$ associated with a clock frequency value $f_{CLK}$.

A calibration function defining the relationship between the clock frequency values $f_{CLK}$ and the corresponding temperatures may be defined by selecting the type of function and the parameters of the function such that the function substantially fits to the experimentally determined values. The function may be e.g. a linear function, a polynomial function or an exponential function.

For example, calibration data may contain parameters of a function, which defines a relationship between clock frequency values $f_{CLK}$ and absolute temperature value $T_{ABS}$.

Absolute temperature data may be determined from temperature data by using the calibration data CALDATA.

When the clock frequency is $f_{CLK}$ is equal to 2.00 MHz, the location of the jump J7 may be associated with a frequency-setting parameter TRcal1. When the clock frequency is $f_{CLK}$ is equal to 2.02 MHz, the location of the jump J7 may be associated with a frequency-setting parameter TRcal2. $\Delta K_{JUMP}$ denotes the difference TRcal2 - TRcal1.

A temperature or a temperature change between a first time and a second time may be detected or determined from the transverse shift of the curve CUR2 with respect to the curve CUR2. The temperature or a temperature change may be detected or determined by monitoring the magnitude of the difference TRcal2 - TRcal1 ($=\Delta K_{JUMP}$).

The magnitude of the difference TRcal2 - TRcal1 may also be expressed by calculating the number of jumps (e.g. J6, J7, J8) covered by the difference TRcal2 - TRcal1

A temperature or a temperature change may be detected or determined by monitoring the magnitude of the difference $\Delta f_{7-7}$.

A pair of modulation frequency values ($f_{LF1}$, $f_{LF2}$), the difference TRcal2 - TRcal1, and/or the difference $\Delta f_{7-7}$, may be interpreted to be temperature data $TD_{ATA}$.

Calibration data for a first transponder 100a may be substantially different from calibration data for a second transponder 100b. Thus, it may be relevant to store calibration data in a memory MEM1 located in the transponder. Alternatively, the calibration data may be stored in an external memory MEM8 (Fig. 10b) such that relevant calibration data may be retrieved based on identification data of a transponder.

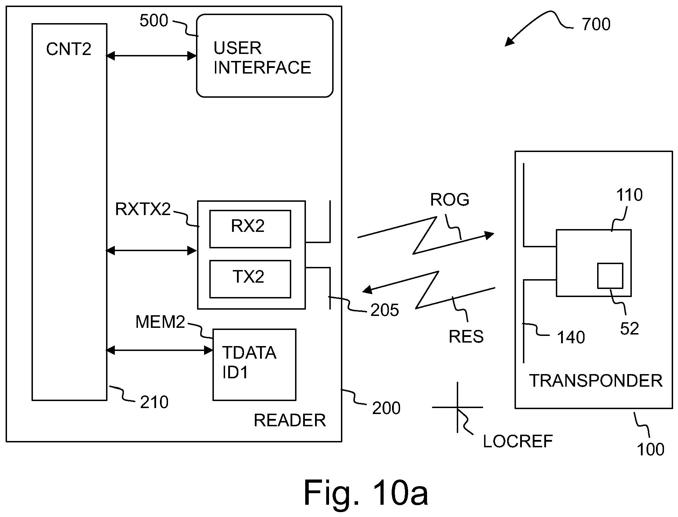

Referring to Fig. 10a, the apparatus 700 may comprise one or more transponders 100, and a reader 200.

The apparatus 700 may be called e.g. as a temperature monitoring apparatus, a condition monitoring apparatus and/or a controlling apparatus.

The reader 200 may stationary or movable with respect to the location reference LOCREF. In particular, the reader 200 may be portable.

The reader 200 may comprise a control unit 210 (CNT2) for controlling operation of the reader 200, and a radio frequency unit RXTX2 for transmitting interrogation signals ROG, and for receiving response signals RES. The radio frequency unit RXTX2 may be arranged to operate such that it provides a radio frequency field which provides operating energy for the transponder 100. The system 700 may be arranged to operate such that the transponder 100 extracts operating energy from the interrogation signal ROG provided by the reader 200.

The radio frequency unit RXTX2 may comprise a transmitter TX2 and a receiver RX2.

The reader 200 comprises at least one antenna 205 for transmitting an interrogation signal ROG. Also the response RES may be received by the (same) antenna 205. The antenna 205 may be e.g. a dipole antenna or an inductive antenna (i.e. a coil).

The antenna 205 may also be a leaky waveguide antenna (not shown) arranged to distribute the electromagnetic radio frequency interrogation signal ROG to a large area. A leaky waveguide antenna may also be arranged to obtain electromagnetic radio frequency response signals RES from said large area. In particular, the leaky waveguide antenna 205 may comprise a microstrip waveguide.

The reader 200 may comprise a memory MEM2 for storing identification data ID1 (identifier F1) and temperature data TDATA1 (temperature information TINF1) associated with the identification data ID1 (identifier F1).

The memory MEM2 (or a memory MEM10, see Fig. 10b) may further comprise computer program code, which when executed by the control unit CNT2 is for carrying out the method according to the present invention.

The reader 200 may comprise a user interface 500. The user interface 500 may comprise e.g. a display 501 (See e.g. Fig. 3a or 5a-5c) for visually displaying temperature information and/or identification data.

Referring to Fig. 10b, the apparatus 700 may comprise one or more additional units and/or functionalities when compared with the set-up of Fig. 10a. In particular, the apparatus 700 may comprise an auxiliary unit 400.

The auxiliary unit 400 may comprise a control unit CNT4 (410) for processing data. In this case, the auxiliary unit 400 may also be called as a data processing unit. The control unit 410 (CNT4) may be arranged to control operation of the auxiliary unit 400 and/or for controlling operation of the reader 200.

The control unit CNT4 may be arranged to provide a control signal $S_{CNT}$ based on a comparison between a measured temperature profile and reference data. The control signal $S_{CNT}$ may be used for controlling e.g. a heater element or a ventilation fan (See Fig. 1). The control signal $S_{CNT}$ may be used for controlling an actuator, heater, cooling unit, ventilation unit, pump etc. based on temperature data obtained from the transponder(s).

The auxiliary unit 400 may optionally comprise one or more of the following memory units or memory areas MEM3, MEM4, MEM5, MEM6, MEM7, MEM8, MEM9, MEM10.

The auxiliary unit 400 (or the reader 200) may comprise a memory MEM3 for storing temperature data TDATA (temperature information). The control unit CNT4 may be arranged to store the temperature data TDATA (temperature information) such that temperature data TDATA obtained from a transponder 100 is associated with identification data ID1 (identification data) obtained from said transponder 100.

The auxiliary unit 400 (or the reader 200) may comprise a memory MEM4 for storing identifier data FDATA. The control unit CNT4 may be arranged to determine an identifier F1 based on identification data ID1 by using identifier data stored in the memory MEM4. Identifiers may be stored in a memory MEM4 such that the identifiers are associated with the corresponding identification data ID1. An identifier may be e.g. a numerical or verbal description of the location of a transponder. An identifier may also be e.g. a photograph indicating the location of the transponder.

If a temperature profile is determined based on temperature data obtained from a group GRP1 of transponders 100a, 100b, 100c, it may be sufficient to determine (only) one identifier F1 for the whole group GRP1.

The auxiliary unit 400 (or the reader 200) may comprise a memory MEM5 for storing absolute temperature data ABSDATA. The control unit CNT4 may be arranged to determine absolute temperature data ABSDATA from temperature data TDATA e.g. by using calibration data CALDATA stored in the memory MEM8. Absolute temperature data ABSDATA may be expressed e.g. in centigrade units (°C), Fahrenheit units (°F) or Kelvin units (K).

The auxiliary unit 400 (or the reader 200) may comprise a memory MEM6 for storing time data TIMEDATA. The control unit CNT4 may be arranged to retrieve a time associated with a specific temperature data value stored in the memory MEM3 by using the time data TIMEDATA stored in the memory MEM6. The memory MEM6 may store time data associated with the temperature data TDATA and/or absolute temperature data ABSDATA. Time data TIMEDATA associated with temperature data TDATA may represent temperature history data. A time data element stored in the memory MEM6 may e.g. specify the time and date of a specific temperature measurement result.

The auxiliary unit 400 (or the reader 200) may comprise a memory MEM7 for storing location data LOCDATA. The control unit CNT4 may be arranged to retrieve a location associated with a specific temperature data value stored in the memory MEM3 by using the location data LOCDATA stored in the memory MEM7. Location of a specific transponder may be retrieved from the memory MEM7 based on identification data ID1 obtained from a transponder 100. The location data may specify a location e.g. verbally or by using location coordinates (e.g. "wall section #5 of 7th storey of building #7" or by indicating GPS coordinates, or by indicating distance to a specified corner of the building).

The location data LOCDATA stored in the memory MEM7 may be determined e.g. by measuring the location of a transponder with a reader 200. Alternatively, the location data LOCDATA may be stored in the memory MEM7 based on knowledge about the position of the transponder. For example, the position of a transponder may be specified in a construction plan of the building.

The memory MEM8 may store calibration data CALDATA associated with the identifier ID1 of a transponder 100. Absolute temperature data ABSDATA may be provided from the temperature data TDATA by using the calibration data CALDATA.

The auxiliary unit 400 may comprise a user interface 500 (not shown). The reader does not need to comprise a user interface 500.

A memory MEM9 may comprise reference data REFDATA. The control unit CNT4 may be arranged to perform an action based on a comparison between a measured temperature profile and reference temperature profile determined by using the reference data REFDATA.

The reference data REFDATA may be stored in the memory MEM9 e.g. based on temperature data, which is obtained from the transponders (sensors) 100a, 100b, 100c in a reference condition. For example, temperature data may be obtained from the transponders 100a, 100b, 100c when the monitored structure is newly installed and/or known to be dry. Alternatively, the reference data REFDATA may be determined by theoretical calculations, based on dimensions and physical properties of the building elements of the structure.

A memory MEM10 may store computer program code PROG, which when executed by a data processor is for operating the apparatus 700 according to the invention. The apparatus 700 may comprise a computer-readable medium MEM10 storing computer program code PROG, which when executed by data processor CNT2, CNT4 is for executing a temperature measurement, displaying and/or control.

COM1 denotes communication between the reader 200 and the auxiliary unit 400. The communication COM1 may take place e.g. via a mobile telephone network, internet, Wireless Local Area Network (WLAN), Bluetooth, electrical cable, and/or optical cable.

The reader 200 may optionally comprise a navigation unit NAV1 for determining the position of the reader 200. The navigation unit NAV1 may comprise e.g. a satellite navigation device, a laser distance meter and/or an ultrasonic distance meter. In particular, the navigation unit NAV1 may be a GPS device (GPS is an acronym for Global Positioning System). The navigation unit NAV1 may be arranged to determine the position of the reader 200 with respect to one or more reference devices. The reference devices may be e.g. optical prisms, crosshair patterns, laser units, or radio beacons.

The reader 200 and/or the auxiliary unit 400 may comprise a user interface 500. The user interface 500 may comprise e.g. a display 501 (See e.g. Fig. 9a or 16c) for displaying temperature information and/or identifiers.

The user interface 500 may comprise e.g. a keypad (not shown) or a touch screen for receiving commands from a user.

The identity of a transponder 100a may also be associated with the location of said transponder 100a. For that purpose, the location of the transponder 100a should be determined. In particular, the location of the transponder 100a may be measured.

In general, the reader 200 and the transponder 100 may be arranged to communicate e.g. according to the EPC Gen2 protocol. EPC Gen2 is a abbreviation for "EPCglobal UHF Class 1 Generation 2". The protocol has been incorporated e.g. in the standard ISO 18000-6C (frequency band 860-960MHz). (Reference is made to the latest versions of the protocol and standard as in force on 29 April 2011).

The reader 200 and the transponder 100 may be arranged to communicate e.g. according to one or more of the following standards:

ISO/IEC 18000-2A (frequency band 125/134.2 kHz, interrogation range e.g. up to 2 m)
ISO/IEC 18000-2B (frequency band 125/134.2 kHz)
ISO 18000-3 (frequency band 13.56 MHz, interrogation range e.g. up to 3 m)
ISO 18000-7 (frequency band 433 MHz)
ISO 18000-6A (frequency band 860-960MHz, interrogation range e.g. up to 3 m)
ISO 18000-6B (frequency band 860-960MHz)
ISO 18000-6C (frequency band 860-960MHz)
EPCglobal Class 0 (frequency band 860-960MHz)
EPCglobal Class 1 (frequency band 860-960MHz)
EPCglobal Class 1 Gen 2 (frequency band 860-960MHz)
ISO 18000-4 (frequency band 2.45 GHz, reading range e.g. up to 12 meters)
Proximity cards: ISO/IEC 14443 (frequency band 13.56 MHz, interrogation range e.g. up to 12.5 cm)
Vicinity cards: ISO/IEC 15693 (frequency band 13.56 MHz, interrogation range e.g. up to 1.5 m)

(Reference is made to the latest versions of the protocols and standards as in force on 29 April 2011).

The transponders 100a, 100b, 100c may be energetically passive so that they can be permanently embedded within the building structures.

Temperature data TDATA1 obtained from a transponder 100 may be based on a temperature-dependent digital signal $f_{CLK}$, TDATA. The transponder 100 may comprise a temperature monitoring unit 52, 55 arranged to generate the temperature-dependent digital signal $f_{CLK}$, TDATA by using operating energy extracted from the radio frequency field ROG.

A reader 200 may obtain temperature data from the transponder so that the temperature data is determined from variations of the modulation frequency $f_{LF}$ of a response RES. Referring back to Fig. 7a, temperature data TDATA1 obtained from the transponder 100 may be determined by monitoring a temperature-dependent frequency $f_{CLK}$ of a local oscillator 52 of the first transponder 100 (i.e. the local oscillator 52 may also operate as a temperature monitoring unit). The local oscillator 52 may provide a digital clock signal, whose frequency may depend on the temperature. The temperature data TDATA1 may be determined from a modulation frequency $f_{LF1}$ of a response signal RES provided by the transponder 100.

Referring to back to Fig. 7b, the transponder 100 may be arranged to obtain a temperature-dependent analog signal from a temperature sensor element 57, and to convert the temperature-dependent analog signal into a temperature-dependent digital signal TDATA by using operating energy extracted from the radio frequency field ROG. The transponder 100 may be arranged to send a response RES such that the temperature data TDATA is included in the response e.g. by using pulse code modulation (PCM), by using pulse interval encoding PIE, and /or by using Manchester encoding. The transponder 100 may be arranged to send a response RES, which contains the temperature data TDATA in pulse code modulated format PCM and/or in a pulse interval encoded format PIE and/or in a Manchester encoded format.

The transponder 100 may be arranged to store temperature data TDATA1 in a memory MEM1 located in the transponder 100. The (digital) temperature data TDATA1 may be stored in a register located in the transponder 100 such that the value of the temperature data TDATA1 may be accessed and read by sending a predetermined interrogation signal ROG to the transponder 100.

For the purposes of measuring a temperature with an RFID transponder, a reference is made to an application PCT/FI2011/050020.

For the purposes of measuring location of an RFID transponder, a reference is made to the application PCT/FI2011/050020.

The sensors 100a, 100b, 100c may be arranged to obtain time-dependent temperature information. The method may comprise varying a temperature ($T_{IN}$, $T_{OUT}$) inside and/or outside the building (600), and determining a thermal capacity value of the structure (350, 380, 390) based on corresponding variation of the first temperature information (TINF1) and/or based on corresponding variation of the second temperature information (TINF2). Temperature $T_{IN}$ inside a building may be varied e.g. by adjusting heating, cooling and/or ventilation. The ambient temperature $T_{OUT}$ may vary naturally as a function of time. The temperature $T_{OUT}$ in the daytime is typically higher than the temperature $T_{OUT}$ in the nighttime. The variation of the temperature $T_{IN}$, and/or $T_{OUT}$ may cause variation in the temperature of a portion of a building structure. If a portion of a building structure has a higher thermal capacity (i.e. heat capacity), the variation in the temperature of said portion may be smaller than the variation in the temperature of a reference portion, which has a lower thermal capacity.

Additional temperature information may also be obtained from one or more wired temperature sensors (e.g. sensors 902, 903 of Fig. 1) and/or from one or more battery-powered temperature sensors (e.g. sensors 902, 903 of Fig. 1), which may be located inside or outside the building 600. The additional temperature information may be used e.g. as reference temperature information when temperature information obtained from the passive transponders is compared with reference temperature information. The additional temperature information may be used to supplement temperature information obtained from the passive transponders.

## Claims

1. A method for monitoring condition of a structure (350, 380, 390) of a building (600), the method comprising:

   - determining first temperature information ($T_1$, TINF1) from first temperature data (TDATA1) obtained from a first temperature sensor (100a),

   wherein the first temperature sensor (100a) is positioned within the structure (350, 380, 390), the first temperature sensor (100a) is an RFID transponder arranged to transmit the first temperature data (TDATA1), the first temperature sensor (100a) is arranged to extract operating energy from a radio frequency field (ROG), and the structure (350, 380, 390) has an increased thermal conductivity in an abnormal condition when compared with a reference condition of the structure (350, 380, 390),
   **characterized in that** the method further comprises:

   - measuring a spatial temperature profile (CRV1) across the structure (350, 380, 390) by using the first temperature data (TDATA1) obtained from the first temperature sensor (100a), by using second temperature data (TDATA2) obtained from a second temperature sensor (100b, 902), and by using third temperature data (TDATA3) obtained from a third temperature sensor (100c, 903), and
- detecting an abnormal condition of the structure (350, 380, 390) by comparing the measured temperature profile (CRV1) with a reference temperature profile (REFCRV1),

wherein the first sensor (100a) is positioned within the structure (350, 380, 390) such that a first distance (zi) between the first temperature sensor (100a) and an inner surface (INSRF) of the structure (350, 380, 390) is different from a second distance ($z_2$) between the second temperature sensor (100b, 902) and the inner surface (INSRF).

2. The method of claim 1 wherein a temperature difference ($T_2$-$T_{OUT}$) between the temperature ($T_2$) of the second temperature sensor (100b) and the temperature ($T_{OUT}$) of an outer surface (EXTSRF) of the structure (350, 380, 390) is smaller than 20% of a temperature difference ($T_{ENV}$) between a temperature of an inner surface (INSRF) of the structure (350, 380, 390) and the temperature ($T_{OUT}$) of the outer surface (EXTSRF) of the structure (350, 380, 390)

3. The method of claim 1 or 2 comprising:

- determining reference temperature information ($T_{1,REF}$) by using the third temperature data (TDATA3) obtained from the third temperature sensor (100c, 903) and by using the second temperature data (TDATA2), and
- comparing the first temperature information ($T_1$,TINF1) with the reference temperature information ($T_{1,REF}$,TREF1).

4. The method according to claim 3 comprising:

- determining a temperature difference ($\Delta T_{31}$) from the first temperature data (TDATA1) and from the third temperature data (TDATA3),
- determining a reference value ($\Delta T_{31,REF}$) by using the second temperature data (TDATA2) and the third temperature data (TDATA3), and
- comparing the temperature difference ($\Delta T_{31}$) with the reference value ($\Delta T_{31,REF}$).

5. The method according to any of the claims 1 to 4 comprising comparing the first temperature information ($T_1$,TINF1) with reference temperature information ($T_{1,REF}$,TREF1), and wherein determining the reference temperature information ($T_{1,REF}$) comprises using reference data (REFDATA), which is retrieved from the memory (MEM9) based on identification data (ID1,ID2,ID3) obtained from at least one of the sensors (100a, 100b, 100c).

6. The method according to any of the claims 1 to 5 comprising detecting moisture (LQ) based on said comparison.

7. The method according to any of the claims 1 to 6 comprising controlling operation of a heating device (710), cooling device (710) and/or a ventilation unit (720) based on said comparison.

8. The method according to any of the claims 1 to 7 comprising varying a temperature ($T_{IN}$, $T_{OUT}$) inside and/or outside the building (600), and monitoring heat capacity of the structure (350, 380, 390) based on time-dependent variation of the first temperature information ($T_1$,TINF1).

9. The method according to any of the claims 1 to 8 wherein said structure is a wall (350), a floor (380) a roof (390), or a ceiling (390) of a building (600).

10. The method according to any of the claims 1 to 9 wherein said second temperature sensor (100b) is an RFID transponder attached to the structure (350, 380, 390).

11. The method according to any of the claims 1 to 10 comprising displaying the temperature information ($T_1$, TINF1, CRV1).

12. The method according to any of the claims 1 to 11 comprising displaying an identifier (F1), which specifies the location and/or identity of the first temperature sensor (100a), wherein the identifier (F1) is determined based on identification data (ID1,ID2,ID3) obtained from at least one of the temperature sensors (100a, 100b,100c).

13. The method according to any of the claims 1 to 12 wherein the first temperature data (TDATA1) is determined by monitoring a temperature-dependent frequency ($f_{CLK}$) of a local oscillator (52) of the first temperature sensor (100a).

14. A combination of an apparatus (700) and a building structure (350, 380, 390), the apparatus (700) comprising:

- a first temperature sensor (100a) arranged to provide first temperature data (TDATA1),

wherein the first temperature sensor (100a) is positioned within the structure (350, 380, 390), the first temperature sensor (100a) is an RFID transponder arranged to transmit the first temperature data (TDATA1), the first temperature sensor (100a) is arranged to extract operating energy from a radio frequency field (ROG), and the structure (350, 380, 390) has an increased thermal conductivity in an abnormal condition when compared with a reference condition of the structure (350, 380, 390),
**characterized in that** the apparatus (700) further comprises:

- a second temperature sensor (100b) arranged to provide second temperature data (TDATA2), and
- a third temperature sensor (100c, 903) arranged to provide third temperature data (TDATA3),

wherein the apparatus (700) is arranged:

- to measure a spatial temperature profile (CRV1) across the structure (350, 380, 390) by using the first temperature data (TDATA1) obtained from the first temperature sensor (100a), by using the second temperature data (TDATA2) obtained from the second temperature sensor (100b, 902), and by using the third temperature data (TDATA3) obtained from the third temperature sensor (100c, 903), and
- to detect an abnormal condition of the structure (350, 380, 390) by comparing the measured temperature profile (CRV1) with a reference temperature profile (REFCRV1),

wherein the first sensor (100a) is positioned within the structure (350, 380, 390) such that a first distance ($z_1$) between the first temperature sensor (100a) and an inner surface (INSRF) of the structure (350, 380, 390) is different from a second distance ($z_2$) between the second temperature sensor (100b) and the inner surface (INSRF).

15. The combination of claim 14, wherein the data processing unit (CNT2, CNT4) is arranged to initiate and alarm and/or to control operation of a heating device (710), cooling device (710) and/or a ventilation unit (720) based on said comparison.

**Patentansprüche**

1. Verfahren zur Überwachung des Zustands einer Struktur (350, 380, 390) eines Gebäudes (600), wobei das Verfahren umfasst:

- das Bestimmen von ersten Temperaturinformationen (Ti,TINF1) anhand von ersten Temperaturdaten (TDATA1), die von einem ersten Temperatursensor (100a) erhalten werden,

wobei der erste Temperatursensor (100a) innerhalb der Struktur (350, 380, 390) positioniert ist, der erste Temperatursensor (100a) ein RFID-Transponder ist, der so angeordnet ist, dass er die ersten Temperaturdaten (TDATA1) überträgt, der erste Temperatursensor (100a) so angeordnet ist, dass er Betriebsenergie von einem Hochfrequenzfeld (ROG) extrahiert, und die Struktur (350, 380, 390) eine erhöhte Wärmeleitfähigkeit in einem abnormalen Zustand im Vergleich zu einem Referenzzustand der Struktur (350, 380, 390) aufweist, **dadurch gekennzeichnet, dass** das Verfahren ferner umfasst:

- das Messen eines Raumtemperaturprofils (CRV1) über die Struktur (350, 380, 390) unter Verwendung der ersten Temperaturdaten (TDATA1), die von dem ersten Temperatursensor (100a) erhalten werden, unter Verwendung von zweiten Temperaturdaten (TDATA2), die von einem zweiten Temperatursensor (100b, 902) erhalten werden, und unter Verwendung von dritten Temperaturdaten (TDATA3), die von einem dritten Temperatursensor (100c, 903) erhalten werden, und
- das Erkennen eines abnormalen Zustands der Struktur (350, 380, 390) durch Vergleichen des gemessenen Temperaturprofils (CRV1) mit einem Referenztemperaturprofil (REFCRV1),

wobei der erste Sensor (100a) derart innerhalb der Struktur (350, 380, 390) positioniert ist, dass sich ein erster

Abstand ($z_1$) zwischen dem ersten Temperatursensor (100a) und einer Innenfläche (INSRF) der Struktur (350, 380, 390) von einem zweiten Abstand ($z_2$) zwischen dem zweiten Temperatursensor (100b, 902) und der Innenfläche (INSRF) unterscheidet.

2. Verfahren nach Anspruch 1, wobei ein Temperaturunterschied ($T_2$-$T_{OUT}$) zwischen der Temperatur ($T_2$) des zweiten Temperatursensors (100b) und der Temperatur ($T_{OUT}$) einer Außenfläche (EXTSRF) der Struktur (350, 380, 390) kleiner als 20 % eines Temperaturunterschieds ($T_{ENV}$) zwischen einer Temperatur einer Innenfläche (INSRF) der Struktur (350, 380, 390) und der Temperatur ($T_{OUT}$) der Außenfläche (EXTSRF) der Struktur (350, 380, 390) ist.

3. Verfahren gemäß Anspruch 1 oder 2, umfassend:

   - das Bestimmen von Referenztemperaturinformationen ($T_{1,REF}$) unter Verwendung der dritten Temperaturdaten (TDATA3), die von dem dritten Temperatursensor (100c, 903) erhalten werden, und unter Verwendung der zweiten Temperaturdaten (TDATA2), und
   - das Vergleichen der ersten Temperaturinformationen (Ti,TINF1) mit den Referenztemperaturinformationen ($T_{1,REF}$, TREF1).

4. Verfahren gemäß Anspruch 3, umfassend:

   - das Bestimmen eines Temperaturunterschieds ($\Delta T_{31}$) anhand der ersten Temperaturdaten (TDATA1) und der dritten Temperaturdaten (TDATA3),
   - das Bestimmen eines Referenzwerts ($\Delta T_{31,REF}$) unter Verwendung der zweiten Temperaturdaten (TDATA2) und der dritten Temperaturdaten (TDATA3), und
   - das Vergleichen des Temperaturunterschieds ($\Delta T_{31}$) mit dem Referenzwert ($\Delta T_{31,REF}$).

5. Verfahren gemäß einem der Ansprüche 1 bis 4, umfassend das Vergleichen der ersten Temperaturinformationen ($T_1$,TINF1) mit Referenztemperaturinformationen ($T_{1,REF}$,TREF1), und wobei das Bestimmen der Referenztemperaturinformationen ($T_{1,REF}$) die Verwendung von Referenzdaten (REFDATA) umfasst, die aus dem Speicher (MEM9) basierend auf Identifikationsdaten (ID1, ID2, ID3) abgerufen werden, die von mindestens einem der Sensoren (100a, 100b, 100c) erhalten werden.

6. Verfahren gemäß einem der Ansprüche 1 bis 5, umfassend das Erkennen von Feuchtigkeit (LQ) basierend auf dem Vergleich.

7. Verfahren gemäß einem der Ansprüche 1 bis 6, umfassend das Steuern des Betriebs einer Heizvorrichtung (710), einer Kühlvorrichtung (710) und/oder einer Belüftungseinheit (720) basierend auf dem Vergleich.

8. Verfahren gemäß einem der Ansprüche 1 bis 7, umfassend das Variieren einer Temperatur ($T_{IN}$, $T_{OUT}$) innerhalb und/oder außerhalb des Gebäudes (600), und die Überwachung der Wärmekapazität der Struktur (350, 380, 390) basierend auf einer zeitabhängigen Variierung der ersten Temperaturinformationen ($T_1$,TINF1).

9. Verfahren gemäß einem der Ansprüche 1 bis 8, wobei die Struktur eine Wand (350), ein Boden (380), ein Dach (390) oder eine Decke (390) eines Gebäudes (600) sind.

10. Verfahren gemäß einem der Ansprüche 1 bis 9, wobei der zweite Temperatursensor (100b) ein RFID-Transponder ist, der an der Struktur (350, 380, 390) angebracht ist.

11. Verfahren gemäß einem der Ansprüche 1 bis 10, umfassend das Anzeigen der Temperaturinformationen ($T_1$,TINF1, CRV1).

12. Verfahren gemäß einem der Ansprüche 1 bis 11, umfassend das Anzeigen einer Kennung (F1), die den Ort und/oder die Identität des ersten Temperatursensors (100a) spezifiziert, wobei die Kennung (F1) basierend auf Identifikationsdaten (ID1, ID2, ID3) bestimmt wird, die von mindestens einem der Temperatursensoren (100a, 100b, 100c) erhalten werden.

13. Verfahren gemäß einem der Ansprüche 1 bis 12, wobei die ersten Temperaturdaten (TDATA1) durch Überwachung einer temperaturabhängigen Frequenz ($f_{CLK}$) eines lokalen Oszillators (52) des ersten Temperatursensors (100a) bestimmt werden.

**14.** Kombination aus einer Einrichtung (700) und einer Gebäudestruktur (350, 380, 390), wobei die Einrichtung (700) umfasst:

- einen ersten Temperatursensor (100a), der so angeordnet ist, dass er erste Temperaturdaten (TDATA1) bereitstellt,

wobei der erste Temperatursensor (100a) innerhalb der Struktur (350, 380, 390) positioniert ist, der erste Temperatursensor (100a) ein RFID-Transponder ist, der so angeordnet ist, dass er die ersten Temperaturdaten (TDATA1) überträgt, der erste Temperatursensor (100a) so angeordnet ist, dass er Betriebsenergie von einem Hochfrequenzfeld (ROG) extrahiert, und die Struktur (350, 380, 390) in einem abnormalen Zustand im Vergleich zu einem Referenzzustand der Struktur (350, 380, 390) eine erhöhte Wärmeleitfähigkeit aufweist, **dadurch gekennzeichnet, dass** die Einrichtung (700) ferner umfasst:

- einen zweiten Temperatursensor (100b), der so angeordnet ist, dass er zweite Temperaturdaten (TDATA2) bereitstellt, und
- einen dritten Temperatursensor (100c, 903), der so angeordnet ist, dass er dritte Temperaturdaten (TDATA3) bereitstellt,

wobei die Einrichtung (700) so angeordnet ist, dass sie:

- ein Raumtemperaturprofil (CRV1) über die Struktur (350, 380, 390) unter Verwendung der ersten Temperaturdaten (TDATA1), die von dem ersten Temperatursensor (100a) erhalten werden, unter Verwendung der zweiten Temperaturdaten (TDATA2), die von dem zweiten Temperatursensor (100b, 902) erhalten werden, und unter Verwendung der dritten Temperaturdaten (TDATA3), die von dem dritten Temperatursensor (100c, 903) erhalten werden, misst, und
- einen abnormalen Zustand der Struktur (350, 380, 390) durch Vergleichen des gemessenen Temperaturprofils (CRV1) mit einem Referenztemperaturprofil (REFCRV1) erkennt,

wobei der erste Sensor (100a) derart innerhalb der Struktur (350, 380, 390) positioniert ist, dass sich ein erster Abstand ($z_1$) zwischen dem ersten Temperatursensor (100a) und einer Innenfläche (INSRF) der Struktur (350, 380, 390) von einem zweiten Abstand ($z_2$) zwischen dem zweiten Temperatursensor (100b) und der Innenfläche (INSRF) unterscheidet.

**15.** Kombination nach Anspruch 14, wobei die Datenverarbeitungseinheit (CNT2, CNT4) so angeordnet ist, dass sie den Betrieb einer Heizvorrichtung (710), einer Kühlvorrichtung (710) und/oder einer Belüftungseinheit (720) basierend auf dem Vergleich initiiert und einen Alarm ausgibt und/oder diese steuert.

**Revendications**

**1.** Procédé pour surveiller l'état d'une structure (350, 380, 390) d'un bâtiment (600), le procédé comprenant :

- la détermination de premières informations de température ($T_1$, TINF1) à partir de premières données de température (TDATA1) obtenues à partir d'un premier capteur de température (100a),
dans lequel le premier capteur de température (100a) est positionné au sein de la structure (350, 380, 390), le premier capteur de température (100a) est un transpondeur RFID disposé afin de transmettre les premières données de température (TDATA1), le premier capteur de température (100a) est disposé afin d'extraire de l'énergie de fonctionnement d'un champ de radiofréquences (ROG), et la structure (350, 380, 390) a une conductivité thermique accrue dans un état anormal en comparaison avec un état de référence de la structure (350, 380, 390),

**caractérisée en ce que** le procédé comprend en outre :

- la mesure d'un profil de température spatial (CRV1) sur l'ensemble de la structure (350, 380, 390) à l'aide des premières données de température (TDATA1) obtenues à partir du premier capteur de température (100a), à l'aide de deuxièmes données de température (TDATA2) obtenues à partir d'un deuxième capteur de température (100b, 902), et à l'aide de troisièmes données de température (TDATA3) obtenues à partir d'un troisième capteur de température (100c, 903), et

- la détection d'un état anormal de la structure (350, 380, 390) par comparaison du profil de température mesuré (CRV1) avec un profil de température de référence (REFCRV1),

dans lequel le premier capteur (100a) est positionné au sein de la structure (350, 380, 390) de telle sorte qu'une première distance ($z_1$) entre le premier capteur de température (100a) et une surface interne (INSRF) de la structure (350, 380, 390) soit différente d'une deuxième distance ($z_2$) entre le deuxième capteur de température (100b, 902) et la surface interne (INSRF).

2. Procédé selon la revendication 1 dans lequel une différence de température ($T_2$-$T_{OUT}$) entre la température ($T_2$) du deuxième capteur de température (100b) et la température ($T_{OUT}$) d'une surface externe (EXTSRF) de la structure (350, 380, 390) est plus petite que 20 % d'une différence de température ($T_{ENV}$) entre une température d'une surface interne (INSRF) de la structure (350, 380, 390) et la température ($T_{OUT}$) de la surface externe (EXTSRF) de la structure (350, 380, 390).

3. Procédé selon la revendication 1 ou la revendication 2 comprenant :

- la détermination d'informations de température de référence ($T_{1,REF}$) à l'aide des troisièmes données de température (TDATA3) obtenues à partir du troisième capteur de température (100c, 903) et à l'aide des deuxièmes données de température (TDATA2), et
- la comparaison des premières informations de température ($T_1$, TINF1) avec les informations de température de référence ($T_{1,REF}$, TREF1).

4. Procédé selon la revendication 3 comprenant :

- la détermination d'une différence de température ($\Delta T_{31}$) à partir des premières données de température (TDATA1) et à partir des troisièmes données de température (TDATA3),
- la détermination d'une valeur de référence ($\Delta T_{31,REF}$) à l'aide des deuxièmes données de température (TDATA2) et des troisièmes données de température (TDATA3), et
- la comparaison de la différence de température ($\Delta T_{31}$) avec la valeur de référence ($\Delta T_{31,REF}$).

5. Procédé selon l'une quelconque des revendications 1 à 4 comprenant la comparaison des premières informations de température ($T_1$, TINF1) avec des informations de température de référence ($T_{1,REF}$, TREF1), et dans laquelle la détermination des informations de température de référence ($T_{1,REF}$) comprend l'utilisation de données de référence (REFDATA), lesquelles sont récupérées à partir de la mémoire (MEM9) sur la base de données d'identification (ID1, ID2, ID3) obtenues à partir d'au moins l'un des capteurs (100a, 100b, 100c).

6. Procédé selon l'une quelconque des revendications 1 à 5 comprenant la détection de l'humidité (LQ) sur la base de ladite comparaison.

7. Procédé selon l'une quelconque des revendications 1 à 6 comprenant la commande du fonctionnement d'un dispositif de chauffage (710), d'un dispositif de refroidissement (710) et/ou d'une unité de ventilation (720) sur la base de ladite comparaison.

8. Procédé selon l'une quelconque des revendications 1 à 7 comprenant la variation d'une température ($T_{IN}$, $T_{OUT}$) à l'intérieur et/ou à l'extérieur du bâtiment (600), et la surveillance de la capacité calorifique de la structure (350, 380, 390) sur la base d'une variation dépendante du temps des premières informations de température ($T_1$, TINF1).

9. Procédé selon l'une quelconque des revendications 1 à 8 dans lequel ladite structure est une paroi (350), un sol (380), un toit (390), ou un plafond (390) d'un bâtiment (600).

10. Procédé selon l'une quelconque des revendications 1 à 9 dans lequel ledit deuxième capteur de température (100b) est un transpondeur RFID relié à la structure (350, 380, 390).

11. Procédé selon l'une quelconque des revendications 1 à 10 comprenant l'affichage des informations de température ($T_1$, TINF1, CRV1).

12. Procédé selon l'une quelconque des revendications 1 à 11 comprenant l'affichage d'un identifiant (F1), lequel spécifie l'emplacement et/ou l'identité du premier capteur de température (100a), dans laquelle l'identifiant (F1) est déterminé sur la base de données d'identification (ID1, ID2, ID3) obtenues à partir d'au moins l'un des capteurs de température (100a, 100b, 100c).

**13.** Procédé selon l'une quelconque des revendications 1 à 12 dans lequel les premières données de température (TDATA1) sont déterminées par surveillance d'une fréquence dépendante de la température ($f_{CLK}$) d'un oscillateur local (52) du premier capteur de température (100a).

**14.** Combinaison d'un appareil (700) et d'une structure de bâtiment (350, 380, 390), l'appareil (700) comprenant :

- un premier capteur de température (100a) disposé afin de fournir des premières données de température (TDATA1),

dans laquelle le premier capteur de température (100a) est positionné au sein de la structure (350, 380, 390), le premier capteur de température (100a) est un transpondeur RFID disposé afin de transmettre les premières données de température (TDATA1), le premier capteur de température (100a) est disposé afin d'extraire de l'énergie de fonctionnement d'un champ de radiofréquences (ROG), et la structure (350, 380, 390) a une conductivité thermique accrue dans un état anormal en comparaison avec un état de référence de la structure (350, 380, 390), **caractérisée en ce que** l'appareil (700) comprend en outre :

- un deuxième capteur de température (100b) disposé afin de fournir des deuxièmes données de température (TDATA2), et
- un troisième capteur de température (100c, 903) disposé afin de fournir des troisièmes données de température (TDATA3),

dans laquelle l'appareil (700) est disposé :

- afin de mesurer un profil de température spatial (CRV1) sur l'ensemble de la structure (350, 380, 390) à l'aide des premières données de température (TDATA1) obtenues à partir du premier capteur de température (100a), à l'aide des deuxièmes données de température (TDATA2) obtenues à partir du deuxième capteur de température (100b, 902), et à l'aide des troisièmes données de température (TDATA3) obtenues à partir du troisième capteur de température (100c, 903), et
- afin de détecter un état anormal de la structure (350, 380, 390) par comparaison du profil de température mesuré (CRV1) avec un profil de température de référence (REFCRV1),

dans laquelle le premier capteur (100a) est positionné au sein de la structure (350, 380, 390) de telle sorte qu'une première distance ($z_1$) entre le premier capteur de température (100a) et une surface interne (INSRF) de la structure (350, 380, 390) soit différente d'une deuxième distance ($z_2$) entre le deuxième capteur de température (100b) et la surface interne (INSRF).

**15.** Combinaison selon la revendication 14, dans laquelle l'unité de traitement de données (CNT2, CNT4) est disposée afin d'amorcer et d'alarmer et/ou afin de commander le fonctionnement d'un dispositif de chauffage (710), d'un dispositif de refroidissement (710) et/ou d'une unité de ventilation (720) sur la base de ladite comparaison.

Fig. 1

100
102

130

110

140                    140

SZ
SY
SX

Fig. 2a

100
102

130

140

110

SZ
SY
SX

Fig. 2b

Fig. 3a

Fig. 3b

Fig. 4a

Fig. 4b

Fig. 4c

501

F3 ⌐ LOC1-C      16°C ⌐ TINF3      ALARM ⌐ AINF3

F1 ⌐ LOC1-A      13°C ⌐ TINF1      ALARM ⌐ AINF1

F2 ⌐ LOC1-B      4°C ⌐ TINF2      OK ⌐ AINF2

## Fig. 5a

501

F1 ⌐ LOC1-C      16°C ⌐ TINF3      21°C ⌐ TREF3

F2 ⌐ LOC1-A      13°C ⌐ TINF1      7°C ⌐ TREF1

F3 ⌐ LOC1-B      4°C ⌐ TINF2

## Fig. 5b

501

TEMP °C

REFCRV1

CRV1

LOC1 ⌐ F1

ALARM ⌐ AINF1

POS Z (mm)

## Fig. 5c

Fig. 6

Fig. 7a

Fig. 7b

ROG

Delimiter | data-0 | R=>T calibration (RTcal) | T=>R calibration (TRcal)

Tari

## Fig. 8

## Fig. 9

Fig. 10a

Fig. 10b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100090802 A
- US 2007222590 A1
- FI 2011050020 W